(19) Europäisches Patentamt
European Patent Office
Office européen des brevets

(11) **EP 2 345 625 A1**

(12) **EUROPEAN PATENT APPLICATION**
published in accordance with Art. 153(4) EPC

(43) Date of publication:
20.07.2011 Bulletin 2011/29

(51) Int Cl.:
*C03B 11/08* (2006.01)    *C03B 11/00* (2006.01)

(21) Application number: 09826013.6

(22) Date of filing: 26.10.2009

(86) International application number:
PCT/JP2009/068336

(87) International publication number:
WO 2010/055763 (20.05.2010 Gazette 2010/20)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 13.11.2008   JP 2008291279

(71) Applicant: Sumitomo Electric Industries, Ltd.
Chuo-ku
Osaka-shi
Osaka 541-0041 (JP)

(72) Inventors:
• UENO, Tomoyuki
Itami-shi
Hyogo 664-0016 (JP)
• HASEGAWA, Masato
Itami-shi
Hyogo 664-0016 (JP)
• TERAOKA, Kanji
Osaka-shi
Osaka 554-0024 (JP)

(74) Representative: Setna, Rohan P.
Boult Wade Tennant
Verulam Gardens
70 Gray's Inn Road
London WC1X 8BT (GB)

(54) **MEMBER FOR FORMING ELEMENT, METHOD OF MANUFACTURING ELEMENT, AND ELEMENT**

(57)     When a groove is provided for letting gas out of a die for molding a material constituting an optical element, a warped shape is sometimes transferred to the lens or other optical element molded from the material. When a through-hole is provided in a hollow body disposed on the outside of the external peripheral surface of the die, the strength of the body is severely reduced.

In the present invention, a groove for letting out gas is provided in at least part of the internal peripheral surface of the body facing the die.

FIG. 2

EP 2 345 625 A1

**Description**

TECHNICAL FIELD

The present invention relates to a component for molding a device used to mold a glass lens or another optical element, and to a method for manufacturing a device which uses the component for molding a device. More specifically, the present invention relates to a component for molding a device for minimizing molding defects, to a method for manufacturing a device which uses the component for molding a device, and also to a device formed using the component and the manufacturing method.

BACKGROUND ART

There is an increasing demand for high performance in lenses as optical elements used in digital cameras, cellular telephones, and other various optical elements and optical communications devices and the like, for example. Therefore, aspherical lenses are used as these lenses. Since it is extremely costly to manufacture an aspherical lens by grinding, it is common practice to perform the molding process using a component for molding a device.

Among the techniques for molding an optical element or another such device by a molding process, one technique is to heat a pair of dies for performing molding, the dies being part of the component for molding a device. However, when this heating is performed, air or another gas will sometimes enter and become trapped between the heated parts of the pair of dies and the material constituting the device placed in the dies. If machining proceeds while this gas remains trapped between the dies and the material, then, for example, the material being molded will be compressed by the gas, and the device being molded from the material will have shape defects or other molding defects.

Accordingly, in order to effectively release the gas trapped between the dies and the material out the exterior, there has been disclosed a technique in, e.g., Japanese Laid-open Patent Application No. 8-337428 (hereinafter referred to as "Patent Document 1") for forming an air groove for removing gas in an area on the external side of the area where the material is disposed (optical effective radius), in the lower die where the material constituting the device is disposed among a pair of upper and lower dies. With this technique, four air grooves, which are used to release the gas to the exterior in a radial pattern outward from a circular shape formed by the outermost area where the material is disposed, are spaced at equal intervals around the circumference of the circle. Since the gas is expelled rather than remaining between the dies and the material, shape defects and other molding defects can be minimized in the lens or other optical element molded from the material, and as a result, the optical characteristics of the molded lens are not compromised.

Japanese Laid-open Patent Application No. 2007-314385 (hereinafter referred to as "Patent Document 2"), for example, discloses a technique for forming a rough surface in an area where the material of the optical element is disposed on the external side (transcriptional range of an optical functional aspect) of an area confined by the upper die and lower die where the optical element main body is formed, in the lower die where the material constituting the optical element is disposed among a pair of upper and lower dies. This rough surface is a surface for releasing gas, which remains between the transcriptional range of the optical functional aspect of the lower die and the material in the transcriptional range of the optical functional aspect, in a radial pattern to the exterior of the die via the rough surface. Since the gas is thereby released rather than remaining between the die and the material, shape defects and other molding defects can be minimized in the lens or other optical element molded from the material, and as a result, the optical characteristics of the molded lens are not compromised.

Furthermore, for example, in the component for molding a device disclosed in Japanese Laid-open Patent Application No. 2007-176707 (hereinafter referred to as "Patent Document 3"), there is a designated space (cavity) in the periphery of the area where the pair of upper and lower dies mesh together and the material of the optical element is disposed. The cavity overlaps with at least some of a plurality of through-holes (straight holes) provided in the external peripheral surface of a hollow body and arranged so as to cover the external peripheral surface of the die, whereby the cavity and the outside area of the body communicate. Therefore, the gas remaining between the die and the material is released to the external area of the body via the communicated through-holes. Patent Document 3 discloses a technique whereby the gas is released in this manner rather than remaining between the die and the material. In Patent Document 3, since shape defects and other molding defects can be minimized in the lens or other optical element molded from the material, the optical characteristics of the molded lens are not compromised.

There is disclosed in, e.g., Japanese Laid-open Patent Application No. 2005-145777 (hereinafter referred to as "Patent Document 4") a component for molding a device provided with a groove geometry running along a ridge in the external peripheral surface of the lower die, whereby gas remaining between the die and the material is released to the exterior of the die via the groove geometry running along the ridge.

PRIOR ART

PATENT DOCUMENTS

Patent Document 1: Japanese Laid-open Patent Application No. 8-337428
Patent Document 2: Japanese Laid-open Patent Application No. 2007-314385
Patent Document 3: Japanese Laid-open Patent Application No. 2007-176707
Patent Document 4: Japanese Laid-open Patent Application No. 2005-145777

DISCLOSURE OF THE INVENTION

PROBLEMS WHICH THE INVENTION IS INTENDED TO SOLVE

However, in cases in which a groove for letting gas out is provided to the die where the material constituting the optical element is disposed, such as is disclosed in, e.g., Patent Documents 1 and 4, it is possible that the stress applied to the die and the material could be uneven during the process of heating the die and molding the material. In this case, the material constituting the optical element disposed in the die sometimes undergoes a miniscule amount of elastic deformation.
Particularly, providing a groove to the die sometimes causes the die to be asymmetrical with respect to an axis running in the longitudinal axial direction and passing through the center of the cross section. In this case, the stress applied to the die and the material during the molding process is applied disproportionately due to the area of the material. As a result, the deformation of the material is disproportionate, thereby causing a warped shape to be transferred to the lens or other optical element molded from the material, and there is therefore a possibility that shape defects or other molding defects will occur.
As is disclosed in Patent Document 2, for example, providing a rough surface and forming cuts (e.g., irregularities) in the die of the component for molding a device compromises the durability of the die, even if the cuts are formed in an area outside of the transcriptional range of optical functional aspect. As a result of the shorter longevity due to the compromised durability, there is a possibility of the die production costs increasing. Since the material constituting the optical element is disposed on the rough surface, there are cases in which the arrangement of the material becomes unstable. When the molding process is carried out under such unstable conditions, it is difficult to center the die, and as a result, there is a possibility that there will be shape defects or other molding defects in the lens or other optical element molded from the material.
Furthermore, as is disclosed in Patent Document 3, for example, when through-holes are provided in the hollow body disposed on the external side of the external peripheral surface of the die, the strength of the body is significantly reduced. Since the body is formed to be hollow with only the external peripheral surface being a rigid component, even if the die body had no through-holes, the strength would still be less than that of a non-hollow cylindrical object. Therefore, when the molding process is carried out using this type of body having through-holes and insufficient strength, there is a possibility that the body will be damaged by the stress being applied to the body.
The present invention was contrived in view of the problems described above, and an object thereof is to provide a component for molding a device whereby gas remaining between the die and the material is minimized as are molding defects originating in the structure of the component for molding a device, a manufacturing method which uses the component for molding a device, and a device formed using the component and the manufacturing method.

MEANS USED TO SOLVE THE ABOVE-MENTIONED PROBLEMS

The component for molding a device according to the present invention is a component for molding a device used to mold a device, comprising a pair of dies for performing molding, a hollow body disposed so as to enclose external peripheral surfaces of the pair of dies, and a frame die for adjusting the position of the material constituting the device between the pair of dies. In the component for molding a device, a concavity is formed in an area constituting at least part of an internal peripheral surface of the body facing the external peripheral surface of the dies.
The pair of dies are dies vertically arranged as a pair in the usual state of use. Designating the vertical direction as a longitudinal axial direction, a cross section intersecting the longitudinal axial direction is a cylindrical shape forming a circle, for example. The curved surfaces of the dies, which extend in the longitudinal axial direction and cover the external surfaces, are herein defined as the external peripheral surfaces. In the components for molding a device disclosed in the aforementioned Patent Documents, a groove for expelling gas remaining between the dies and the material for molding a device is provided to the die in which the material is disposed. Meanwhile, in the component for molding a device according to the present invention, the groove (concavity) is provided in the hollow body disposed so as to enclose the external peripheral surfaces of the dies. Therefore, since a groove is not provided to the dies where the material for molding the device is disposed, a uniform state of stress applied to the dies and the material can be preserved when the molding process is performed on the material.

Since the hollow body is disposed so as to cover the external peripheral surfaces of the pair of dies, the groove (concavity) for expelling the gas to be expelled from the external peripheral surfaces of the dies to the exterior of the component for molding a device is formed in an area constituting at least part of the internal peripheral surface of the body, which faces the external peripheral surfaces of the dies. The internal peripheral surface herein refers to a curved surface extending in the longitudinal axial direction of the body and covering the internal surface. If this configuration is used, gas can be efficiently expelled to the exterior of the component for molding a device via the groove in the internal peripheral surface of the body.

In cases where a concavity is provided to the body, as with cases where a through-hole is provided, the extent by which the strength of the body is reduced is small. Therefore, it is possible to provide a component for molding a device which has adequate durability and expels gas efficiently. With this type of component, the occurrence of shape defects and other molding defects can be minimized.

The external shape of the cross section intersecting the longitudinal axial direction of the dies, the body, and the frame die is preferably circular, as previously described. The term "intersecting" used herein indicates the state of being orthogonal to the longitudinal axial direction, for example.

Since the component for molding a device according to the present invention is used to mold lenses as optical elements used in various optical elements, optical communication devices, and the like, the component for molding a device preferably has a circular cross section in order to mold circular lenses.

The dimension of the above-described groove (concavity) formed in the internal peripheral surface of the body preferably satisfies the equation:

$$L = R_m - \sqrt{(R_m{}^2 - D^2)} - \{R_s - \sqrt{(R_s{}^2 - D^2)}\} \leq 0.001$$

where 2D (mm) is the width of the concavity that extends in a direction intersecting the longitudinal axial direction of the dies, $R_m$ (mm) is the radius of the dies from the center of a circular shape formed by the cross section of the dies to the external peripheral surfaces of the dies, and $R_s$ (mm) is the radius of the body from the center of a circular shape formed by the cross section of the body to the internal peripheral surface of the body.

If the opposing upper and lower paired dies are disposed so as to have point symmetry about the center of a cross section intersecting the longitudinal axial direction of the body, the device formed by performing the molding process will have an ideal shape having no decenter. However, in actuality, since there is a groove in the internal peripheral surface of the body, there are cases in which an area of the dies in the external peripheral surface vicinity fits into the groove. When the dies fit into the groove, the dies become decentered with respect to the body, and the device formed by the molding process therefore has a shape with a specified amount of decenter. To make the area where the dies fit into the groove as small as possible, the previously described distance L over which the body fits into the concavity is preferably 0.001 mm or less, and more preferably 0.0005 mm or less.

The following relationships are preferably satisfied:

$$\alpha_1 < \alpha_2$$

$$\alpha_1 < \alpha_3$$

$$0.030 \geq (\alpha_1 D_i - \alpha_2 D_p)\Delta T + (D_i - D_p) \geq 0.005$$

$$0.150 \geq (\alpha_1 D_i - \alpha_3 D_r)\Delta T + (D_i - D_r) \geq 0.015$$

where T (°C) is the sintering temperature when the material is molded, $D_i$ (mm) is the inside diameter of a circular shape formed by a cross section intersecting the longitudinal axial direction of the body, Dp (mm) is the outside diameter of a circular shape formed by a cross section intersecting the longitudinal axial direction of the dies, $D_r$ (mm) is the outside diameter of a circular shape formed by a cross section intersecting the longitudinal axial direction of the frame die, $\alpha 1$ (/°C) is the average coefficient of thermal expansion of the body from room temperature at which the material is disposed between the pair of dies to T (°C), $\alpha_2$ (/°C) is the average coefficient of thermal expansion of the dies from room temperature to T (°C), $\alpha_3$ (/°C) is the average coefficient of thermal expansion of the frame die from room temperature to T (°C), and $\Delta T$ (°C) is the difference between the sintering temperature T (°C) and the room temperature at which the material is disposed between the pair of dies.

As described above, the molding process is preferably performed during a state in which the pair of opposing dies are not decentered in relation to the body, but it is possible to achieve a highly satisfactory accuracy of decenter at the heating temperature T (°C) for performing molding, by effectively using the difference in thermal expansion between the pair of dies and the body when the dies are actually being heated. However, when the inside diameter $D_i$ (mm) of the body viewed in a cross section is less than the outside diameter Dp (mm) of the cross section of the pair of dies at T (°C), sometimes a thermal insert state arises and the sliding capacity in the component for molding a device is severely reduced. In view of this, between the body and the pair of dies at T (°C), there is preferably a gap of a specified dimension or greater as viewed in a cross section. However, when the inside diameter $D_i$ (mm) of the body when viewed in a cross section at T (°C) is too large in comparison with the outside diameter Dp (mm) of the cross section of the pair of dies, the accuracy of decenter in the device is compromised. The aforementioned mathematical relationships show that it is preferable that this gap be from 0.005 mm or greater to 0.030 mm or less.

Similarly, there is preferably a gap of a specified dimension or greater between the body and the frame die when viewed in a cross section at T (°C). The frame die is used in order to adjust the position where the material constituting the device is disposed, and is a component formed using a high-strength (high flexural strength) material. Because of this, when the frame die becomes thermally inserted in the body, the durability of the body poses a serious problem. Therefore, the frame die preferably has an even larger gap to the body than the previously described pair of dies. However, when the gap is too large, the precision of positioning the device is compromised. The aforementioned mathematical relationships show that it is preferable that this gap be from 0.015 mm or greater to 0.150 mm or less.

The above-described concavity of the body preferably extends in a direction coinciding with the longitudinal axial direction of the body. For example, processing the concavity of the body so that the concavity extends in a direction coinciding with the longitudinal axial direction is easier and has better merit in terms of processing costs than processing the concavity so that the concavity extends in a direction intersecting the longitudinal axial direction (i.e., in a direction substantially coinciding with the peripheral direction of the internal peripheral surface of the body).

The above-described concavity of the body may also extend in a direction intersecting the longitudinal axial direction of the body. The term "intersect" herein includes, for example, both a structure in which the concavity extends in an inclined direction at a specified angle relative to the longitudinal axial direction of the body, and a structure in the concavity extends in a direction substantially perpendicular to the longitudinal axial direction of the body. If the concavity extends in a direction intersecting the longitudinal axial direction of the body in this manner, the amount by which the dies fit into the concavity is reduced even if the width of the concavity is substantially the same as that of the previously described concavity extending in a direction coinciding with the liquid substance, for example. Therefore, suitable accuracy of decenter can be preserved. The concavity may also be disposed so as to describe a spiraling shape in the internal peripheral surface of the body, for example. In this case as well, the amount by which the dies fit into the concavity can be reduced, similar to the previously described case in which the concavity of the body extends in a direction intersecting the longitudinal axial direction of the body.

This concavity disposed in the internal peripheral surface of the body may also be formed in a plurality throughout the internal peripheral surface of the body. In this case, the concavities are preferably disposed at equal intervals in the circumferential direction of the internal peripheral surface of the body. The term "equal intervals" herein includes cases of substantially equal intervals (for example, cases in which the difference in distance between concavities along the circumferential direction of the body is within $\pm$ 15% of the average value). Thus, if the concavities are disposed at equal intervals, the action of expelling gas remaining between the die and the material can be performed uniformly throughout the entire die. The stress applied to the entire component for molding a device when the molding process is performed can also be made uniform.

The materials constituting the constituent elements of the component for molding a device according to the present invention will now be described. First, to satisfy the mathematical relationships previously described, the body preferably includes at least 90 mass% or more of a material whose coefficient of thermal expansion is from $1.0 \times 10^{-7}$ (/°C) or greater to $3.5 \times 10^{-6}$ (/°C) or less, e.g., the body preferably includes 90 mass% or more of quartz glass. Commonly, quartz glass is often used as the material of the body. Possible examples of another material whose coefficient of thermal expansion value is within the aforementioned range are glass carbon; Adceram, which is a composite ceramic material of lithium aluminum silicate ($LiAlSi_2O_6$) and wollastonite ($CaO\text{-}SiO_2$); and the like. These materials may be used as the material of the body.

Alternatively, the material of the body may include 90 mass% or more of silicon nitride. Using a material containing silicon nitride for the body can make the strength of the formed body greater than cases in which the above-described quartz glass is used.

It is also preferred that at least the sliding surfaces of the pair of dies facing the internal peripheral surface of the body be formed from a carbon-containing material. The carbon-containing material herein preferably includes any one material selected from the group consisting of graphite, glass carbon, diamond-like carbon (DLC), and diamond.

The pair of dies are preferably formed entirely from a carbon-containing material, not merely in the sliding surfaces facing the internal peripheral surface of the body. Including carbon can improve the degree of demolding (ease of removal from the dies) by which the formed device is removed from dies after the device has been molded. Particularly, by forming at least the sliding surfaces facing the internal peripheral surface of the body from a material containing predominantly carbon, the ease with which the dies and the body slide against each other can be improved, and the above-described ease of removal can be further improved. Possible allotropes of carbon include graphite, glass carbon, DLC, and diamond. At least the above-described sliding surfaces of the pair of dies facing the internal peripheral surface of the body may be formed from a material including these allotropes.

In the component for molding a device according to the present invention, the edges of the pair of upper and lower dies constituting the component for molding a device, where the sliding surfaces and pressing surfaces for pressing the material intersect, are preferably surfaces having an R-chamfer or C-chamfer of from 0.2 mm or greater to 1.0 mm or less. The term "R-chamfered surface" herein refers to a surface formed into a curved shape having a certain radius (R) at the border between two surfaces. The term "C-chamfered surface" herein refers to a surface provided so as to intersect two intersecting surfaces. In the case of an R-chamfered surface, the aforementioned radius (R) is preferably from 0.2 mm or greater to 1.0 mm or less. In the case of a C-chamfered surface, the length of the section over which the C-chamfered portion spans the two intersecting surfaces is preferably from 0.2 mm or greater to 1.0 mm or less.

The ease with which the dies and the body slide against each other can be improved by providing this manner of R-chamfered surfaces or C-chamfered surfaces. This R-chamfering or C-chamfering also fulfills the role of minimizing galling or catching of the dies in the body.

The frame die preferably includes at least 90 mass% or more of a ceramic having a flexural strength of 300 MPa or greater. More specifically, the frame die is preferably configured from a material including any one ingredient selected from the group consisting of silicon carbide, silicon nitride, alumina, boron carbide, zirconia, and tantalum carbide.

The frame die is used in order to adjust the position where the material constituting the device is disposed between the pair of dies. The pressure of pressing during molding acts directly on the frame die as lateral pressure. Therefore, the frame die is preferably formed using a high-strength (high flexural strength) material. Therefore, the frame die is preferably configured from a material including any material selected from the group described above. It is also preferred that the frame die commonly include the strong materials described above.

The method for manufacturing a device using the component for molding a device described above comprises a step for preparing a material, a step for disposing the material in a die, a step for heating the die, and a step for pressing the material. In the step for pressing the material, even if the die fits into the groove (concavity) provided in the internal peripheral surface of the body as previously described, if the die is heated in the step for heating the die, the position of the die relative to the body can be corrected via the difference in coefficients of thermal expansion between the die and the body. Therefore, the device formed via these steps has a highly favorable accuracy of decenter.

EFFECT OF THE INVENTION

According to the component for molding a device of the present invention, gas remaining between the dies and the material can be minimized, as can molding defects in the formed device, which originate in the structure of the component for molding a device. As a result, a device formed using the component for molding a device of the present invention has a highly favorable accuracy of decenter.

BRIEF DESCRIPTION OF THE DRAWINGS

FIG. 1 is a schematic drawing showing an external view of the component for molding a device according to an embodiment of the present invention;
FIG. 2 is a schematic cross-sectional view along line II-II in FIG. 1;
FIG. 3 is a schematic view showing a state in which part of the area in proximity to the upper die external peripheral surface has been fitted into the groove;
FIG. 4 is a chart for calculating the distance L over which the die is fitted into the groove;
FIG. 5 is a schematic view showing a state in which the center of the circular shape formed by the cross section of the upper die and lower die coincides with the center of the circular shape formed by the cross section of the body;

FIG. 6 is a schematic view showing a state in which the external peripheral surface of the upper die is in contact with the internal peripheral surface of a body having no groove;

FIG. 7 is a schematic drawing showing an enlarged view of section "VII" enclosed by the dashed-line circle in FIG. 6;

FIG. 8 is a schematic cross-sectional view showing the arrangement, the dimensions, and the coefficients of thermal expansion at room temperature of the pair of dies, the body, and the frame die in the component for molding a device according to an embodiment of the present invention;

FIG. 9 is a schematic cross-sectional view showing the arrangement, the dimensions, and the coefficients of thermal expansion at a molding temperature T (°C) of the pair of dies, the body, and the frame die in the component for molding a device according to an embodiment of the present invention;

FIG. 10 is a schematic view showing the state of the edge where the external peripheral surface of the upper die and the pressure surface of the upper die intersect when the edge has been R-chamfered;

FIG. 11 is a schematic view showing the state of the edge where the external peripheral surface of the upper die and the pressing surface of the upper die intersect when the edge has been C-chamfered;

FIG. 12 is a development view of a body having a groove formed in a direction coinciding with the longitudinal axial direction;

FIG. 13 is a development view of a body having a groove along the longitudinal axial direction in only the upper half of the body;

FIG. 14 is a development view of a body having a groove along the longitudinal axial direction in only the lower half of the body;

FIG. 15 is a development view of a body in which a groove is formed along the longitudinal axial direction only in the lower half of the body, and a horizontal groove extends from the lower end of the first groove through to the exterior;

FIG. 16 is a development view of a body having a groove formed in a direction that intersects the longitudinal axial direction;

FIG. 17 is a development view of a body having a groove in a direction intersecting with the longitudinal axial direction in only the upper half of the body;

FIG. 18 is a development view of a body having a groove in a direction intersecting with the longitudinal axial direction in only the lower half of the body;

FIG. 19 is a development view of a body in which a groove intersecting the longitudinal axial direction is formed only in the lower half of the body, and a horizontal groove extends from the lower end of the first groove through to the exterior;

FIG. 20 is a development view of a body in which grooves are disposed so as to form a spiraling shape in the internal peripheral surface of the body;

FIG. 21 is a development view of a body in which a plurality of grooves is disposed in the internal peripheral surface of the body; and

FIG. 22 is a flowchart showing a method for manufacturing a device using the component for molding a device according to the present invention.

BEST MODE OF CARRYING OUT THE INVENTION

Embodiments of the present invention are described hereinbelow with reference to the drawings. In these embodiments, elements which carry out the same functions are denoted by the same symbols, and descriptions thereof are not repeated if they are not particularly necessary.

Embodiments

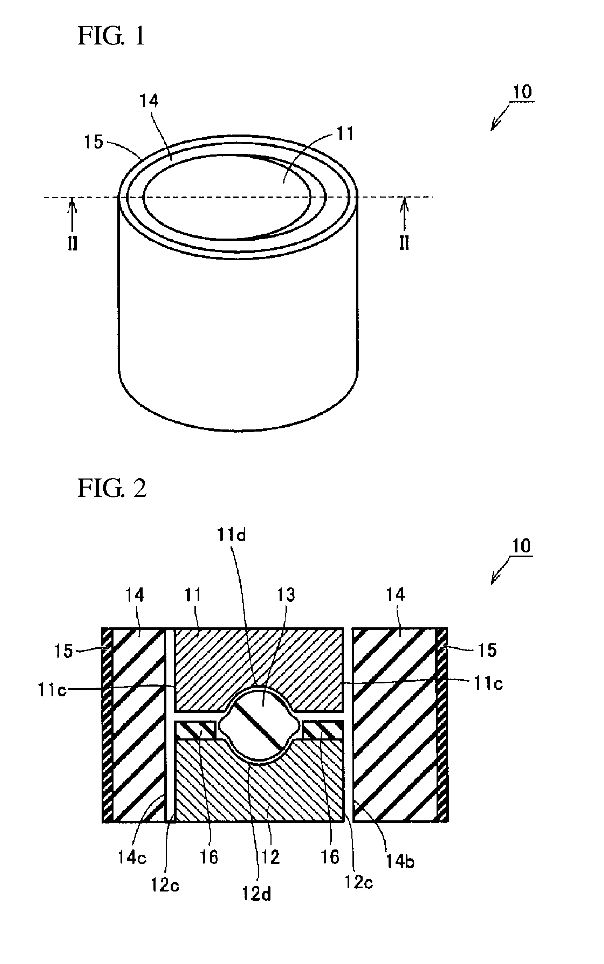

FIG. 1 is a schematic drawing showing an external view of the component for molding a device according to an embodiment of the present invention. FIG. 2 is a schematic cross-sectional view along line II-II in FIG. 1. In other words, FIG. 2 shows a cross section of a direction coinciding with the longitudinal axial direction (vertical direction) of FIG. 1. A component 10 for molding a device according to an embodiment of the present invention comprises an upper die 11 and a lower die 12, which perform molding and which constitute a vertically arranged pair in their usual state of use, as shown in FIGS. 1 and 2. A hollow body 14 is disposed so as to enclose the external peripheral surface of the die (the upper die 11 and the lower die 12). This body 14 is provided in order to house the upper die 11 and the lower die 12, to position the upper die 11 and the lower die 12 inside the internal peripheral surface of the body 14, and to allow the dies to slide. A frame die 16 (a ring) for adjusting the position of the material constituting the device is disposed on the top surface of the lower die 12. A groove 14c, which is a concavity having a constant width in a direction coinciding with the internal peripheral surface of the left side of the body 14, is disposed in the internal peripheral surface in a direction coinciding with the longitudinal axial direction of the body 14, as shown in the cross-sectional view of FIG. 2 in particular. Fitted in the groove 14c, depending on the positioning of the upper die 11 and the lower die 12, is part of an area in proximity to an upper die external peripheral surface 11c and a lower die external peripheral surface 12c, which are the respective external peripheral surfaces of the upper die 11 and the lower die 12. This part of the area is fitted into the groove 14c in the radial direction of the circular shape formed by the cross section of the body 14 and the die (the upper die 11 and the lower die 12).

The component 10 for molding a device shown in FIGS. 1 and 2 is used in the molding of a lens or window as an optical element used in a camera (visible light camera, infrared camera), a cellular telephone, a window (visible light transmissive, infrared ray transmissive, visible light cut), or other various optical elements, optical communication devices, and the like. In cases in which the main surface of the lens is circular, the material constituting the device is disposed on an area inside the internal peripheral surface of the frame die 16 which is a ring. In this case, to mold the device so that its external surface is circular, the cross section intersecting the longitudinal axial direction (the vertical direction in FIGS. 1 and 2) of the frame die 16 and of the upper die 11, the lower die 12, and the body 14 constituting the component 10 for molding a device preferably has a circular external shape.

A material 13 constituting the device is disposed in an area inside the frame die 16 disposed on the lower die 12, as shown in the cross-sectional view of FIG. 2. In this configuration, when the upper die 11 is set on the lower die 12 in order to press the material 13 from above, the material 13 is sandwiched vertically between the upper die 11 and the lower die 12, as shown in FIG. 2. Therefore, a lower die molding surface 12d, where the material 13 is disposed on the lower die 12, and an upper die molding surface 11d, to which the material 13 adheres when the upper die 11 is set on the lower die 12 in order to press the material 13, both have a shape coinciding with the shape of the lens to be molded.

A sleeve 15 is disposed so as to cover the entire external peripheral surface of the body 14, as shown in FIGS. 1 and 2. It is difficult to control the temperature when the upper die 11, the lower die 12, and the material 13 are rapidly heated. Therefore, the sleeve 15 is disposed for the purpose of blocking the heating light and using radiation heat or transferred heat to heat the upper die 11, the lower die 12, and the material 13.

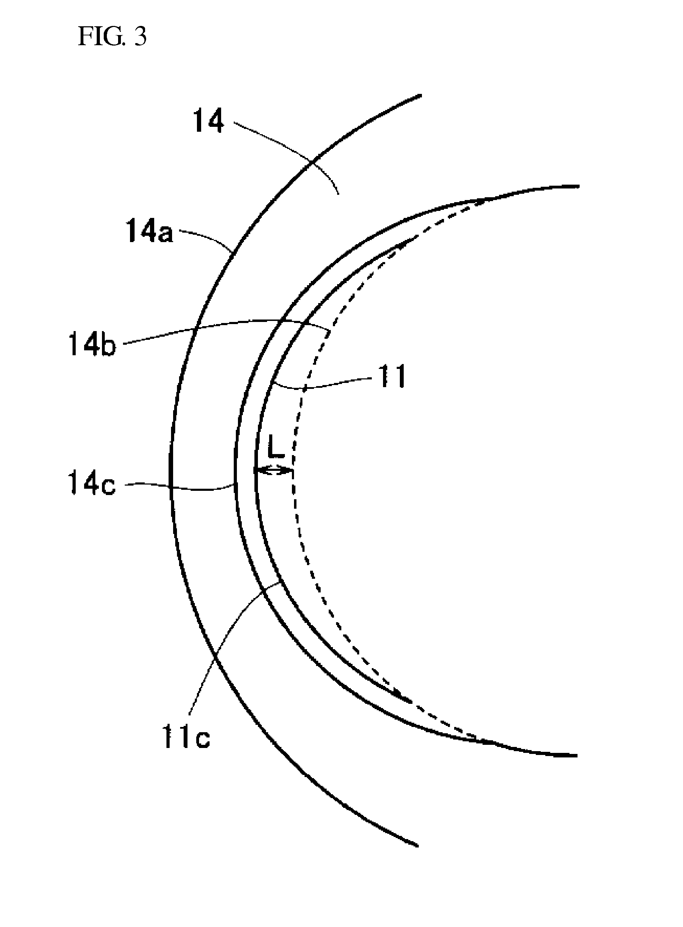

FIG. 3 is a schematic view showing a state in which part of the area in proximity to the upper die external peripheral surface has been fitted into the groove. In other words, FIG. 3 shows a view as seen from planes in the upper sides in FIGS. 1 and 2, or a state of viewing a cross section intersecting the longitudinal axial direction (the vertical direction in the drawings) of the component 10 for molding a device. FIG. 3 shows a body external peripheral surface 14a, a body internal peripheral surface 14b, and the groove 14c of the body 14. In the body internal peripheral surface 14b, the portion indicated by the dashed line in FIG. 3 represents the body internal peripheral surface 14b in a case in which there is no groove 14c. In the radial direction (from right to left in the drawing) of the circular shape formed by the cross section of the body 14 and the upper die 11 as shown in FIG. 3, when the distance L, which is the distance over which the area of the upper die 11 in proximity to the upper die external peripheral surface 11c fits into the groove 14c, is larger than the same distance would be with a body internal peripheral surface 14b in a case where there is no groove 14c, the upper die 11 and the lower die 12 are more decentered in relation to the body 14 towards the side (to the left in FIG. 3) where the groove 14c is located. If molding is performed in this state, there will be a large amount of decenter in the molded device as well. Therefore, it is preferred that the distance L be as small as possible.

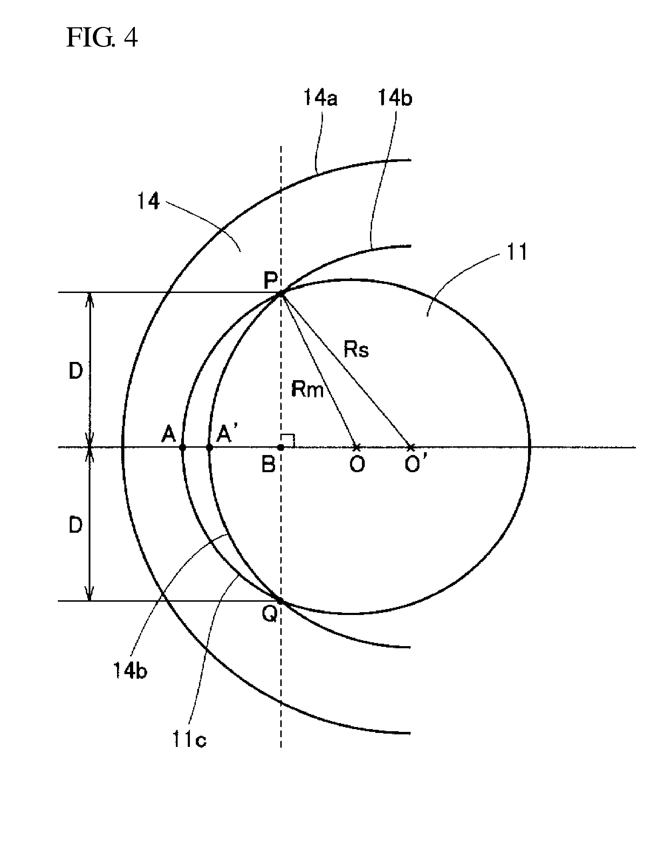

FIG. 4 is a chart for calculating the distance L over which the die fits into the groove. To compare FIG. 4 with FIG. 3 previously described, L in FIG. 3 corresponds to the part in FIG. 4 described hereinbelow. First, a straight line is envisioned connecting point A, where the upper die external peripheral surface 11c fitted into the groove 14c fits deepest in the depth direction (to the left in FIG. 4) of the groove 14c, and point O, which is the center point of the circular shape formed by the cross section of the upper die 11. At this time, L is the distance between A and A', when an intersection point A' is envisioned between the straight line AO and the body internal peripheral surface 14b in the hypothetical case of the body 14 having no groove 14c.

$R_m$ (mm) denotes the radius of the circular shape formed by the cross section of the upper die 11, and $R_s$ (mm) (O' is the center of the body internal peripheral surface 14b) denotes the radius of the body internal peripheral surface 14b, as shown in FIG. 4. Specifically, $R_m$ (mm) is the radius from the center point O of the circular shape formed by the cross section of the upper die 11 to the upper die external peripheral surface 11c, and $R_s$ (mm) is the radius from the center O' of the circular shape formed by the cross section of the body 14 to the body internal peripheral surface 14b. The distance between the two intersection points between the upper die external peripheral surface 11c and the body internal peripheral surface 14b is therefore the width over which the groove 14c (see FIG. 3), not shown in FIG. 4, extends in a direction intersecting with the longitudinal axial direction of the upper die 11. Since the groove 14c is divided into two equal parts by point A and point O, for example, the width of the groove 14c is expressed as 2D (mm) as shown in FIG. 4. Point P denotes one of the two intersection points (the upper intersection point in the FIG. 4) between the upper die external peripheral surface 11c and the body internal peripheral surface 14b, and point Q denotes the other of the two intersection points (the lower intersection point in the FIG. 4), as shown in FIG. 4. If B represents the intersection point between line PQ and line AO, point B is the point where the groove 14c is divided equally in two. Therefore, PB = D. Focusing on the right triangle BOP, according to the Pythagorean theorem:

$$BO = \sqrt{(R_m^2 - PB^2)} = \sqrt{(R_m^2 - D^2)}$$

Focusing on the right triangle BO'P:

$$BO' = \sqrt{(R_s^2 - PB^2)} = \sqrt{(R_s^2 - D^2)}$$

Also, A'O' = $R_s$, therefore:

$$A'B = A'O' - BO' = R_s - \sqrt{(R_s^2 - D^2)}$$

AO = Rm, therefore:

$$L = AA' = AO - BO - A'B = R_m - \sqrt{(R_m^2 - D^2)} - \{R_2 - \sqrt{(R_s^2 - D^2)}\}$$

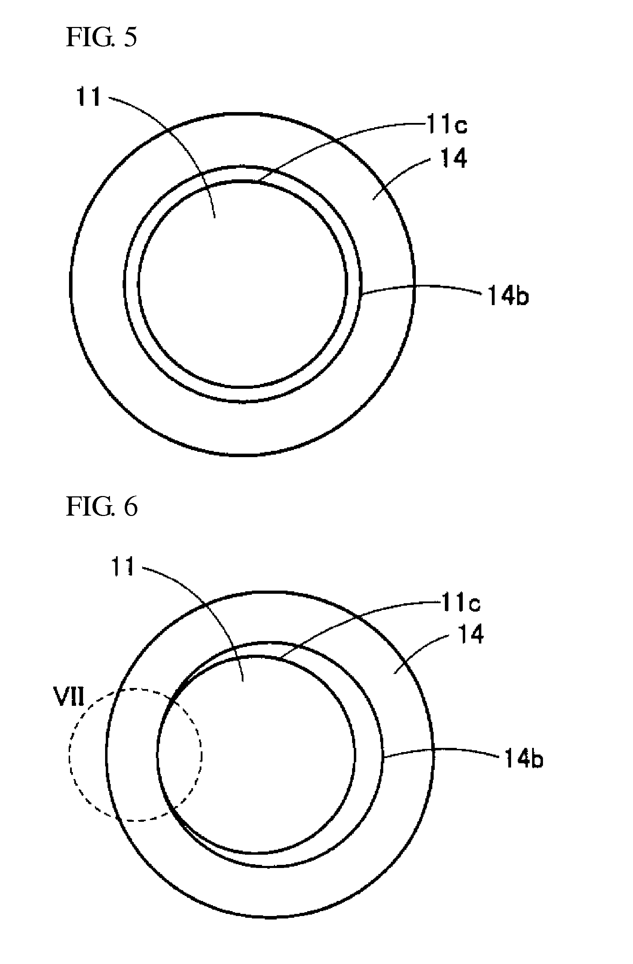

The width of the groove 14c, the radius of the cross section of the pair of dies, and other dimensions are preferably designed so that the distance L over which the upper die 11 fits into the groove 14c is 0.001 mm or less, i.e. 1 μm or less. If the molded lens or other device has a large amount of decenter, the performance of the lens suffers. Specifically, to preserve the definition of images captured through the lens, it is ideal that there be no (zero) decenter in the molded device. FIG. 5 is a schematic view showing a state in which the center of the circular shape formed by the cross section of the upper die and lower die coincides with the center of the circular shape formed by the cross section of the body. In the state shown in FIG. 5, the center of the circular shape formed by the cross section of the upper die 11 and the lower die 12 (not shown) coincides with the center of the circular shape formed by the cross section of the body 14. Therefore, considering a state in which the upper die 11 is set on the lower die 12 in order to press the material 13 and the upper die 11 and lower die 12 are arranged as a pair of dies, the center of the circular shape formed by the cross section of the pair of dies and the center of the circular shape formed by the cross section of the body 14 coincide. If the molding process is carried out in this state, there will be no decenter in the molded device.

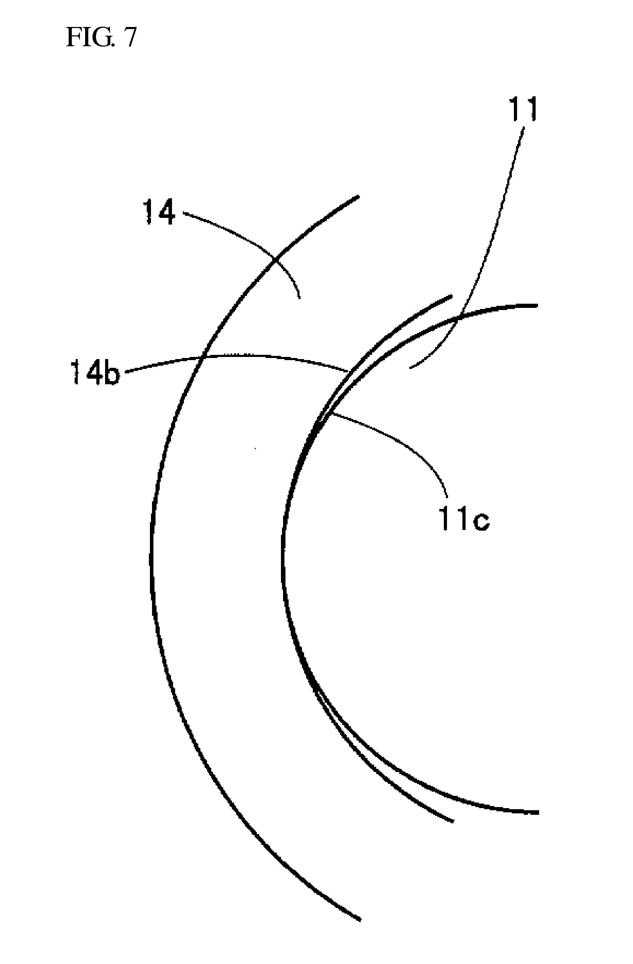

FIG. 6 is a schematic view showing a state in which the external peripheral surface of the upper die is in contact with the internal peripheral surface of a body having no groove. FIG. 7 is a schematic drawing showing an enlarged view of section "VII" enclosed by the dashed-line circle in FIG. 6. The amount of allowable decenter in the lens, which can be determined from the results of an optical simulation, is about 10 μm. However, if molding is performed with the decenter having a designed value of zero, for example, due to machining errors and the effects of temperature distribution during molding, there is a possibility that after molding has been performed the diameter of the body internal peripheral surface 14b (including the groove 14c) will be less than the diameter of the upper die external peripheral surface 11c, for example, resulting in a so-called thermally inserted state. To avoid this occurrence, the radius exhibited by the external peripheral surface of the upper die 11 (and the lower die 12 not shown) is preferably less than the radius exhibited by the internal peripheral surface of the body 14, as shown in FIG. 6. The center of the circular shape formed by the cross section of the upper die 11 (and the lower die 12 not shown) is therefore decentered from the center of the circular shape formed by the cross section of the body 14, as shown in FIGS. 6 and 7 (the decenter is to the left in FIGS. 6 and 7). However, since there is no groove 14c (see FIGS. 2 through 4) in the body 14, the value of L based on the previous definition is zero even if there is decenter such that the upper die external peripheral surface 11c of the upper die 11 comes to a position of being in contact with the body internal peripheral surface 14b of the body 14 as shown in FIGS. 6 and 7, in the case that the body 14 does have a groove 14c. Specifically, this means that the actual amount of decenter of the upper die 11 (the lower die 12) in relation to the body 14 is less than the value of L according to the mathematical formula presented above.

Taking into account the circumstances described above, and also the machining precision of the upper die 11, the lower die 12, and other constituent elements of the component 10 for molding a device, as well as the handling precision when the upper die 11 is set on the lower die 12; the margin of deviation of L, which is a reference of the amount of decenter when the upper die external peripheral surface 11c is fitted into the groove 14c, is approximately 1 μm of the allowable amount of decenter 10 μm. Therefore, since L is preferably 1 μm or less, it is preferable that L ≤ 0.001 (mm) as described above. It is even more preferable that L ≤ 0.0005 (mm), i.e. that L be 0.5 μm or less. Therefore,

the actual amount of decenter is presumably greater than L as described above.

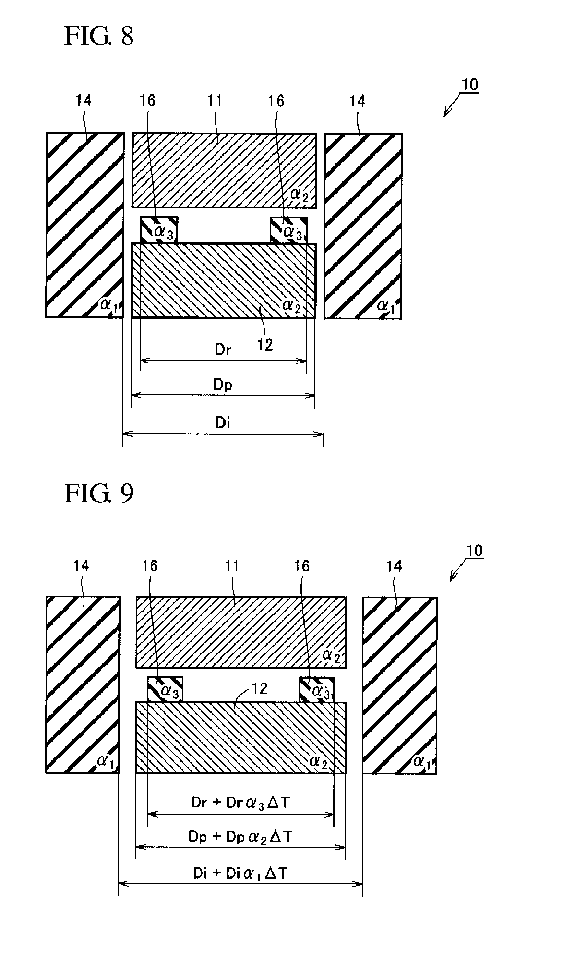

The possibility of the body internal peripheral surface 14b being thermally inserted in the upper die external peripheral surface 11c after molding was described above, but the occurrence of a thermal insert can be prevented by effectively using the difference in coefficients of thermal expansion between the materials of the body 14 and the pair of dies, or other constituent elements of the component 10 for molding a device. FIG. 8 is a schematic cross-sectional view showing the arrangement, the dimensions, and the coefficients of thermal expansion at room temperature of the pair of dies, the body, and the frame die in the component for molding a device according to an embodiment of the present invention. FIG. 9 is a schematic cross-sectional view showing the arrangement, the dimensions, and the coefficients of thermal expansion at a molding temperature T (°C) of the pair of dies, the body, and the frame die in the component for molding a device according to an embodiment of the present invention.

In the component 10 for molding a device at room temperature before heating is performed (such as when the material 13 is pressed) for molding, for example, $D_i$ (mm) denotes the inside diameter of the circular shape formed by a cross section intersecting the longitudinal axial direction (the vertical direction) of the body 14, Dp (mm) denotes the outside diameter of the circular shape formed by a cross section intersecting the longitudinal axial direction of the upper die 11 and the lower die 12, $D_r$ (mm) denotes the outside diameter of the circular shape formed by a cross section intersecting the longitudinal axial direction of the frame die 16, $\alpha_1$ (/°C) denotes the average coefficient of thermal expansion of the body 14 between room temperature and T (°C), $\alpha_2$ (/°C) denotes the average coefficient of thermal expansion of the upper die 11 and the lower die 12 between room temperature and T (°C), and $\alpha_3$ (/°C) denotes the average coefficient of thermal expansion of the frame die 16 between room temperature and T (°C), as shown in FIG. 8. At this time, it is preferable that $D_i > Dp > D_r$ in order to avoid the previously described problem of a thermal insert, as shown in FIG. 8.

The following is a description of the dimensions of the constituent elements of the component 10 for molding a device in a case in which the component 10 for molding a device of FIG. 8 is heated to a heating temperature T (°C) for molding. If the temperature difference between room temperature and T (°C) is denoted by $\Delta T$ (°C), the inside diameter of the circular shape formed by the cross section of the body 14, for example, is $D_i + \alpha_1 D_i \Delta T$ (mm). Similarly, the outside diameter of the circular shape formed by the cross section of the upper die 11 and the lower die 12 is $D_p + \alpha_2 D_p \Delta T$ (mm), and the outside diameter of the circular shape formed by the cross section of the frame die 16 is $D_r + \alpha_3 D_r \Delta T$ (mm). At the heating temperature T (°C) during molding, it is preferred that there be a fixed gap between the body 14 and the upper die 11 and lower die 12 as shown in FIG. 9, in order to avoid the above-described problem of a thermal insert. Specifically, $(D_i + \alpha_1 D_i \Delta T) > (Dp + \alpha_2 D_p \Delta T)$. Furthermore, this gap is preferably of a size such that: $0.030 \geq (D_i + \alpha_1 D_i \Delta T) - (Dp + \alpha_2 D_p \Delta T) = (\alpha_1 D_i - \alpha_2 D_p)\Delta T + (D_i - D_p) \geq 0.005$ (mm). In other words, the gap is preferably from 5 $\mu$m or greater to 30 $\mu$m or less. If so, it is possible to prevent the above-described problem of a thermal insert as well as a loss of accuracy of decenter in the device.

Similarly, it is preferred that there be a fixed gap between the body 14 and the frame die 16, which is a ring. Moreover, the frame die 16 is used to position the material 13 to be molded, which is disposed in the area inside the internal peripheral surface of the frame die, and a high-strength material is used for the frame die; therefore, when a thermal insert forms due to heating during molding, there is a possibility that the durability of the body 14 will be severely reduced. In view of this, it is preferred that the gap between the body 14 and the frame die 16 be equal to or greater than the gap between the body 14 and the upper die 11 (the lower die 12). Specifically:

$$0.150 \geq (D_i + \alpha_1 D_i \Delta T) - (D_r + \alpha_3 D_r \Delta T) = (\alpha_1 D_i - \alpha_3 D_r)\Delta T + (D_i - D_r) \geq 0.015 \ (mm)$$

In other words, it is preferred that the gap be from 15 $\mu$m or greater to 150 $\mu$m or less. Providing a gap having at least the dimensions described above makes it possible to prevent a thermal insert from forming during molding as well as loss of device-positioning precision.

When the respective materials for the body 14, the upper die 11 (the lower die 12), and the frame die 16 are selected, it is preferred that $\alpha_1 < \alpha_2$ and $\alpha_1 < \alpha_3$. If so, the step of arranging the material 13 can be made easier by providing adequately wide gaps between the body 14 and the frame die 16 and between the body 14 and the upper die 11 (the lower die 12) at room temperature, for example, using the difference in coefficients of thermal expansion. At the same time, a high accuracy of decenter can be preserved by adequately reducing the size of the gaps between the body 14 and the frame die 16 and between the body 14 and the upper die 11 (the lower die 12) at the molding temperature T (°C), for example.

Specific materials for forming the constituent elements of the component 10 for molding a device are described herein. First, it is preferred that the body 14 be formed using a material containing at least 90 mass% or more of a material whose coefficient of thermal expansion is from $1.0 \times 10^{-7}$ (/°C) or greater to $3.5 \times 10^{-6}$ (/°C) or less. It is particularly preferable to use a material containing at least 90 mass% or more of quartz glass whose coefficient of thermal expansion is $5.0 \times 10^{-7}$ (/°C). It is even more preferable to use a material composed of the above-described quartz glass (containing 100 mass% of quartz glass) as the material of the body 14.

If quartz glass is used as the body 14, since quartz glass has a low coefficient of thermal expansion, the step of arranging the material 13 can be made easier by providing an adequately large gap between the body 14 and the upper die 11 (the lower die 12) at room temperature, for example. Since heating light or radiant light permeates the quartz glass, the quartz glass has the effect of making it easier to control the temperature of the entire die set.

Alternatively, a material containing at least 90 mass% or more of silicon nitride may be used as the body 14. By using a material containing silicon nitride as the material of the body 14, the strength of the body 14 formed can be increased more so than in cases of using a material containing the above-described quartz glass.

The sleeve 15 disposed so as to cover the external peripheral surface in the longitudinal axial direction of the body 14 is preferably made of any one material selected from the following group: glass carbon, graphite, silicon nitride, silicon carbide, alumina, boron carbide, zirconia, tantalum carbide, molybdenum, and tungsten, for example. Using these materials for the sleeve 15 has the effect of blocking the heating light and using the radiant heat or transferred heat to heat the entire component 10 for molding a device including the upper die 11, the lower die 12, and the material 13.

The pair of dies, which are the upper die 11 and the lower die 12, are preferably formed from a material containing carbon. The material containing carbon herein preferably includes any one material selected from the following group: graphite, glass carbon, DLC, and diamond.

It is preferred that in addition to the sliding surfaces facing the body internal peripheral surface 14b, e.g., the upper die external peripheral surface 11c (the lower die external peripheral surface 12c), the pair of dies also be entirely formed from a material containing carbon such as those described above. This is because including carbon can improve the degree of demolding (ease of removal from the die) by which the formed device is removed from the upper die 11 (lower die 12) after the material 13 has been molded by the upper die 11 and the lower die 12, which are the constituent elements subjected to heating. Since the coefficient of thermal expansion of glass carbon is $2.8 \times 10^{-6}$ (/°C) and the coefficient of thermal expansion of diamond is $1.1 \times 10^{-6}$ (/°C), for example, it is easy for the coefficients of thermal expansion of the pair of dies to be $\alpha_1 < \alpha_2$ as described above.

Particularly, by forming at least the sliding surfaces facing the internal peripheral surface of the body 14, e.g., the upper die external peripheral surface 11c (the lower die external peripheral surface 12c) from a material containing predominantly carbon, the ease with which the pair of dies and the body 14 slide against each other can be improved, and the above-described ease of removing the mold from the die can be further improved.

Possible allotropes of carbon include graphite, glass carbon, DLC, and diamond. If at least the upper die external peripheral surface 11c (lower die external peripheral surface 12c) of the above-described pair of dies, which is a surface that slides against the internal peripheral surface of the body 14, is formed from a material containing these allotropes, sufficient slidability against the body 14 can be ensured.

In the step of pressing the material against the frame die 16, which is a ring, during molding, the surface of the upper die 11 which faces the lower die 12 applies a large amount of lateral pressure. Therefore, the material used for the frame die 16 preferably is high in strength, and particularly in flexural strength, assuming there will be cases in which a large amount of stress is applied from the side. Specifically, the frame die 16 is preferably formed from a ceramic having a flexural strength of 300 MPa or greater, or the frame die 16 preferably includes at least 90 mass% or more of a ceramic. If the frame die 16 is formed using such a material, high durability can be maintained even if a large amount of pressure is applied during molding (during pressing).

Specifically, it is preferred that the frame die 16 be configured from a material including any one ingredient selected from the group consisting of silicon carbide, silicon nitride, alumina, boron carbide, zirconia, and tantalum carbide.

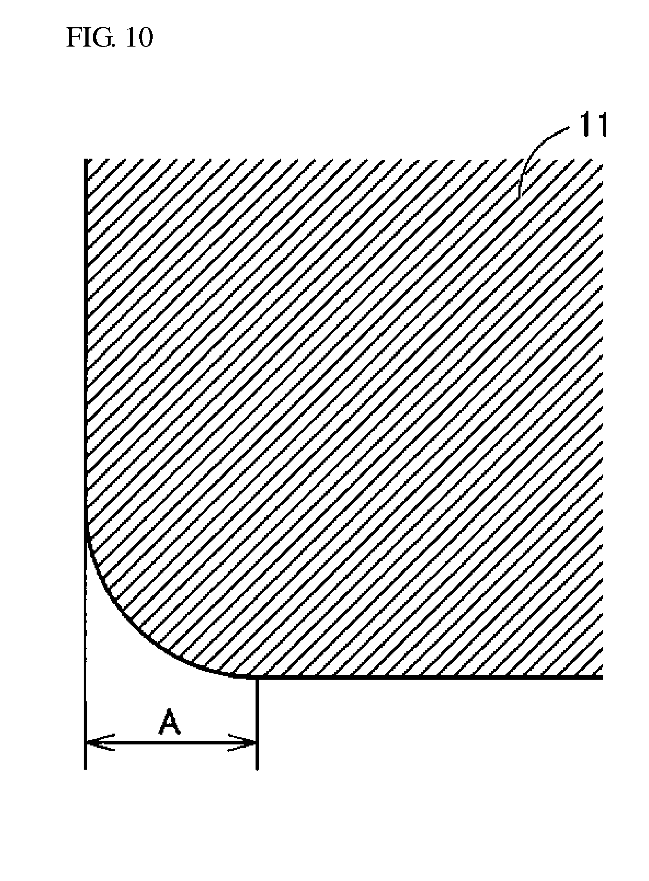

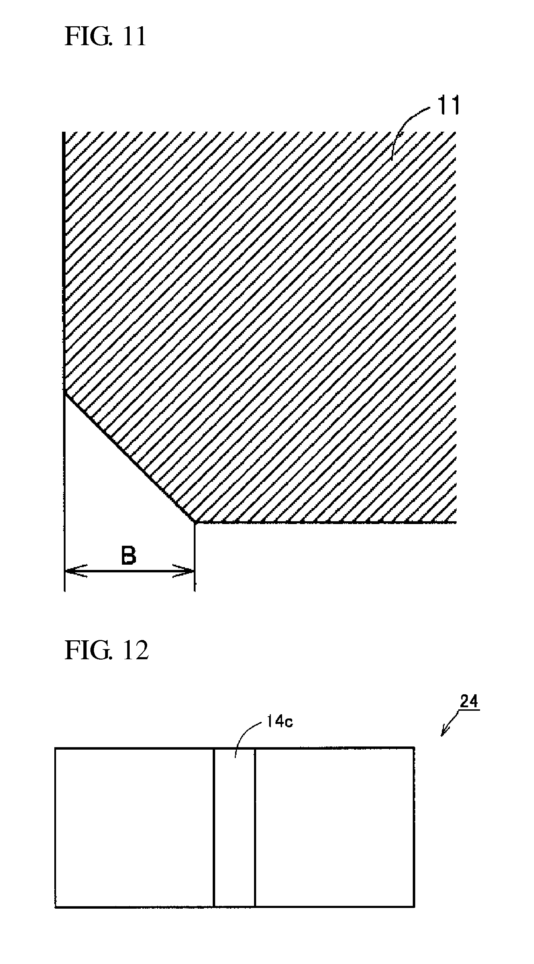

FIG. 10 is a schematic view showing the state of the edge where the external peripheral surface of the upper die and the pressure surface of the upper die intersect when the edge has been R-chamfered. FIG. 11 is a schematic view showing the state of the edge where the external peripheral surface of the upper die and the pressing surface of the upper die intersect when the edge has been C-chamfered. Particularly, to further improve the slidability between the upper die 11 and lower die 12 and the body 14, the edge of the upper die 11, which is the intersection between the upper die external peripheral surface 11c as the sliding surface and the pressing surface that presses the material 13, preferably has an R-chamfered surface 17 or a C-chamfered surface 18 of from 0.2 mm or greater to 1.0 mm or less, for example, as shown in FIGS. 10 and 11. If the edge is a sharp corner that has not been machined as the R-chamfered surface 17 and the C-chamfered surface 18 have been, when the die slides parallel to the longitudinal axial direction, there is a possibility that problems of galling or catching will occur as a result of the edge interfering with the internal peripheral surface of the body 14 or foreign objects being trapped between the edge and the internal peripheral surface of the body 14. In order to prevent these problems, the structure preferably has an R-chamfered surface 17 or a C-chamfered surface 18.

If this structure is used, even if the upper die external peripheral surface 11c is in contact with the internal peripheral surface of the body 14, the possibility of the edge interfering with the internal peripheral surface of the body 14 can be reduced because there is a space (draft) formed between the edge and the internal peripheral surface of the body 14. It is also easy to expel gas, which forms between the upper die 11 and the lower die 12 when the pair of dies are heated in order to perform molding, for example, to the groove 14c (see FIGS. 2 and 3) via the space (draft) located in the portion formed by the R-chamfered surface 17 or the C-chamfered surface 18.

The radius of the R-chamfered portion of the edge as shown in FIG. 10 (dimension A in FIG. 10) is preferably 0.2 mm or greater. The dimension of the C-chamfered cut portion of the edge as shown in FIG. 11 (dimension B in FIG. 11) is preferably 0.2 mm or greater.

If the radius of the R-chamfered portion or the dimension of the C-chamfered cut portion is increased by too much, it poses a problem in that machining costs could increase. Furthermore, if the radius of the R-chamfered portion or the dimension of the C-chamfered cut portion is increased by too much, there will be a greater ratio of sections where the value of the outside diameter (e.g. Dp (mm) in FIG. 8) formed by a cross section intersecting the long axis in the upper die 11 is less than Dp, for example. In other words, there will be a smaller ratio of sections where the value of the above-described diameter of the upper die 11 is Dp. Therefore, a problem occurs in which the longitudinal axial direction of the upper die 11 readily becomes inclined in relation to the longitudinal axial direction of the body 14. Because of the circumstances described above, the radius of the R-chamfered portion is preferably 1.0 mm or less. The dimension of the C-chamfered cut portion is also preferably 1.0 mm or less.

With a component 10 for molding a device having any of the configurations described above, the upper die 11 and the lower die 12 slide satisfactorily against the body 14, and gas remaining between the upper die 11 and the lower die 12 can be easily expelled when heating is performed during the molding process. To easily expel the gas remaining between the upper die 11 and the lower die 12 further outside of the body 14 after the gas has been expelled outside of the upper die 11 or the lower die 12, the groove 14c, which is a concavity, is disposed in an area constituting at least part of the internal peripheral surface of the body 14.

FIG. 12 is a development view of a body having a groove formed in a direction coinciding with the longitudinal axial direction. The body development view 24 shown in FIG. 12 is a development view of the internal peripheral surface of the body 14. The vertical direction is the longitudinal axial direction of the body 14, and the horizontal direction is the internal peripheral direction of the body 14. The groove 14c shown in FIG. 12 has a structure extending in a direction coinciding with the longitudinal axial direction (the vertical direction in FIG. 12) of the body 14, similar to the groove 14c previously described in FIG. 2. Providing a gap of a fixed width in the internal peripheral direction results in a structure having the previously described width 2D (mm) shown in FIG. 4.

For example, when the area with the material 13 between the upper die 11 and lower die 12 shown in FIG. 2 is heated in order to perform, for example, the molding process, the heating causes desorption or volatilization (evaporation) of the adsorption gas as well as a chemical reaction, for example, thereby yielding air or another gas. The resulting gas remains in the area where the material 13 is disposed between the upper die molding surface 11d of the upper die 11 and the lower die molding surface 12d of the lower die 12 shown in FIG. 2. If the gas remains in this manner, stress is applied to the material 13 when the material 13 is molded. Therefore, strain may be imposed on the shape of the material 13 from which the device is molded, air bubbles may remain in the molded object (the device), or in the case of molding while sintering, the sintering may not be precise. As a result, shape defects or other molding defects may occur in the molded object (the device). The groove 14c disposed in the internal peripheral surface of the body 14 and having a fixed depth (in the radial direction of a circular shape formed by the cross section of the body 14) has the role of efficiently discharging remaining gas to the exterior of the component 10 for molding a device.

The groove 14c is preferably formed across the entire longitudinal axial direction of the body 14 (i.e., from the upper end of the body 14 to the lower end), as shown in FIG. 12. If so, the area where air remains between the upper die 11 and the lower die 12 is located near the center if viewed in the longitudinal axial direction, for example, but a groove 14c located near the center easily causes gas to move from the upper end of the body 14 to the bottom end along the groove 14c formed along the longitudinal axial direction and to be expelled from either the upper end or the lower end. Since there are two directions, upward and downward, in which the gas can be expelled to the exterior, the gas can be efficiently expelled to the exterior.

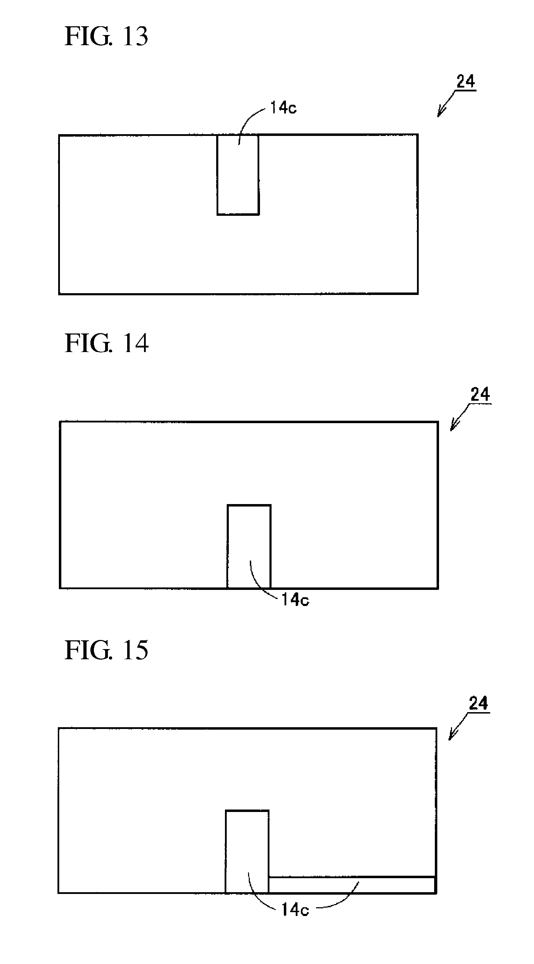

FIG. 13 is a development view of a body having a groove along the longitudinal axial direction in only the upper half of the body.

A groove 14c having a fixed width is disposed in a direction coinciding with the longitudinal axial direction of the body 14 only from the center vicinity of the longitudinal axial direction of the body 14 (i.e., the area enclosed between the upper die 11 and the lower die 12) to the top side (i.e., the area facing the upper die external peripheral surface 11c, which is the external peripheral surface of the upper die 11), as shown in FIG. 13. Even with this type of configuration, a gas remaining in the area enclosed between the upper die 11 and the lower die 12 can travel upward through the groove 14c from the groove portion near the aforementioned area (i.e., the lower end vicinity of the groove 14c), and the gas can be expelled from the upper end portion of the body 14 to the exterior of the component 10 for molding a device. Since there is nothing to block the expulsion of gas in the top end portion of the body 14, the gas can be efficiently expelled to the exterior from the top end of the upper die 11.

Disposing the groove 14c in only the top half of the body 14 reduces the amount by which the pair of dies (the upper die 11) facing the groove 14c fits into the groove 14c, in comparison with cases in which the groove 14c is disposed from the top end of the body 14 to the bottom end, as shown in FIG. 12, for example. If an attempt is made to fit the upper die 11 into the groove 14c, since there is no groove 14c for fitting in the lower die 12 in the portion underneath the groove 14c, the pair of dies cannot be entirely fitted into the groove 14c. Therefore, the pair of dies can be prevented from fitting into the groove 14c by reducing the length over which the groove 14c is disposed as shown in FIG. 13, and as a result, the amount of decenter in the molded device can be reduced.

FIG. 14 is a development view of a body having a groove along the longitudinal axial direction in only the lower half of the body.

A groove 14c having a fixed width is disposed in a direction coinciding with the longitudinal axial direction of the body 14 only from the center vicinity of the longitudinal axial direction of the body 14 (i.e., the area enclosed between the upper die 11 and the lower die 12) to the bottom side (i.e., the area facing the lower die external peripheral surface 12c, which is the external peripheral surface of the lower die 12), as shown in FIG. 14. Even with this type of configuration, a gas remaining in the area enclosed between the upper die 11 and the lower die 12 can travel downward through the groove 14c from the groove portion near the aforementioned area (i.e., the upper end vicinity of the groove 14c), and the gas can be expelled from the lower end portion of the body 14 to the exterior of the component 10 for molding a device.

If this configuration is used, the gas led into the groove 14c is efficiently expelled to the exterior of the component 10 for molding a device. Since the gas led into the groove 14c flows downward through the groove 14c, the effect of gravity helps the gas to be expelled smoothly to the exterior.

In this case, similar to the groove 14c shown in FIG. 13, the length over which the groove 14c is disposed in the extending direction is less than that of the groove 14c shown in FIG. 12, for example. Therefore, the pair of dies can be prevented from fitting into the groove 14c, and as a result, the amount of decenter of the molded device can be reduced.

FIG. 15 is a development view of a body in which a groove is formed along the longitudinal axial direction only in the lower half of the body, and a horizontal groove extends from the lower end of the first groove through to the exterior. In the case of the body 14 shown in FIG. 14 previously described, in which a groove 14c is disposed only from the center vicinity of the longitudinal axial direction of the body 14 to the bottom side, gas which has been led into the groove 14c from the upper end vicinity of the groove 14c and which remains in the area enclosed by the upper die 11 and the lower die 12, for example, travels downward through the groove 14c to the lower end portion of the body 14. However, having been stopped at the lower end portion of the body 14 by the floor or stand on which the body 14 is placed, the gas might be expelled to the exterior of the body 14 (the exterior of the component 10 for molding a device) with reduced efficiency. In view of this, a configuration is designed in which the gas can pass through the body 14 and the sleeve 15 and can be expelled to the exterior of the component 10 for molding a device, due to the groove 14c being disposed in a direction coinciding with the horizontal direction from the lower end vicinity of the body 14, as shown in FIG. 15.

The groove 14c shown in FIG. 12 previously described, which runs in a direction coinciding with the longitudinal axial direction from the upper end of the body 14 to the lower end, may also be provided with a groove 14c which runs from the lower end vicinity of the body 14 in a direction coinciding with the horizontal direction, similar to the groove 14c shown in FIG. 15. If so, the gas flowing downward through the groove 14c can be efficiently expelled to the exterior.

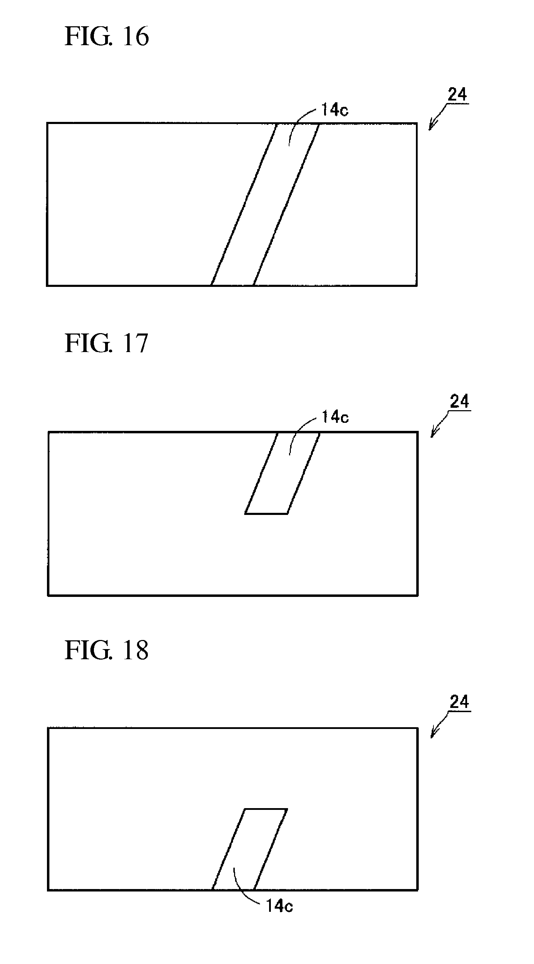

FIG. 16 is a development view of a body having a groove formed in a direction that intersects the longitudinal axial direction. Unlike the groove 14c shown in FIGS. 12 through 15 previously described, the groove 14c in the body development view 24 shown in FIG. 16 is configured so as to extend in a direction that intersects the longitudinal axial direction (the vertical direction in FIG. 16), i.e., at an incline in relation to the longitudinal axial direction. The width of the groove 14c in the body 14 is 2D (mm), similar to the groove 14c in FIGS. 12 through 15. The groove 14c in FIG. 16 differs from the groove 14c in FIG. 12 only in that the groove extends at an incline in relation to the longitudinal axial direction as described above.

Even if the groove 14c extends at an incline in relation to the longitudinal axial direction in this manner, the groove still has the function of expelling the gas remaining between the upper die 11 and the lower die 12, similar to the cases in which the groove 14c extends in a direction coinciding with the longitudinal axial direction. Although the width of the groove 14c in FIG. 16 is 2D (mm), similar to the width of the groove 14c in FIG. 12, for example, the pair of dies (the upper die 11 and the lower die 12) facing the groove 14c fit into the groove 14c in a smaller amount in the case of a groove extending at an incline to the longitudinal axial direction such as the groove 14c in FIG. 16, than in the case of a groove extending in a direction coinciding with the longitudinal axial direction such as the groove 14c in FIG. 12. The pair of dies have a shape extending in a direction coinciding with the longitudinal axial direction. Therefore, if an attempt is made to fit the pair of dies into a groove 14c having a shape intersecting with the longitudinal axial direction, since the length of the groove 14c is short as seen in a direction coinciding with the longitudinal axial direction, the portion without the groove 14c mechanically interferes with the pair of dies fitting into the groove 14c. Therefore, the greater the angle of the groove 14c in relation to the longitudinal axial direction, the more readily the pair of dies interferes with the groove 14c, and it is therefore possible to minimize the interference of the pair of dies with the groove 14c.

FIG. 17 is a development view of a body having a groove in a direction intersecting with the longitudinal axial direction in only the upper half of the body. A groove 14c having a fixed width is disposed in a direction intersecting the longitudinal axial direction of the body 14 only from the center vicinity of the longitudinal axial direction of the body 14 (i.e., the area enclosed between the upper die 11 and the lower die 12) to the top side (i.e., the area facing the upper die external peripheral surface 11c, which is the external peripheral surface of the upper die 11), as shown in FIG. 17. Even with this type of configuration, a gas remaining in the area enclosed between the upper die 11 and the lower die 12 can travel upward through the groove 14c from the groove portion near the aforementioned area (i.e., the lower end vicinity of the groove 14c), and the gas can be expelled from the upper end portion of the body 14 to the exterior of the component 10 for molding a device. Since there is nothing to block the expulsion of gas in the upper end portion of the body 14, the gas can be efficiently expelled to the exterior from the upper end of the upper die 11.

The groove 14c in FIG. 17 is similar to the groove 14c in FIG. 13 described above in that the length of the groove 14c in the direction of extension is shorter, and the pair of dies can thereby be prevented from fitting into the groove 14c. Furthermore, the groove 14c extends in a direction intersecting the longitudinal axial direction, similar to the groove 14c in FIG. 16 described above, whereby the pair of dies can be prevented from fitting into the groove 14c. The effect of both of these characteristics is that the groove 14c in FIG. 17 makes it possible to minimize the fitting of the pair of dies into the groove 14c, even more so than the groove 14c previously described. As a result, the amount of decenter in the molded device can be reduced even further.

FIG. 18 is a development view of a body having a groove in a direction intersecting with the longitudinal axial direction in only the lower half of the body. A groove 14c having a fixed width is disposed in a direction intersecting the longitudinal axial direction of the body 14 only from the center vicinity of the longitudinal axial direction of the body 14 (i.e., the area enclosed between the upper die 11 and the lower die 12) to the bottom side (i.e., the area facing the lower die external peripheral surface 12c, which is the external peripheral surface of the lower die 12), as shown in FIG. 18. Even with this type of configuration, a gas remaining in the area enclosed between the upper die 11 and the lower die 12 can travel downward through the groove 14c from the groove portion near the aforementioned area (i.e., the upper end vicinity of the groove 14c), and the gas can be expelled from the lower end portion of the body 14 to the exterior of the component 10 for molding a device. If this configuration is used, since the gas led into the groove 14c flows downward through the groove 14c, the effect of gravity helps the gas to be expelled smoothly to the exterior.

The groove 14c in FIG. 18 is similar to the groove 14c in FIG. 14 described above in that the length of the groove 14c in the direction of extension is shorter, and the pair of dies can thereby be prevented from fitting into the groove 14c. Furthermore, the groove 14c extends in a direction intersecting the longitudinal axial direction, similar to the groove 14c in FIG. 16 described above, whereby the pair of dies can be prevented from fitting into the groove 14c. The effect of both of these characteristics is that the groove 14c in FIG. 18 makes it possible to minimize the fitting of the pair of dies into the groove 14c, even more so than the groove 14c in FIG. 17. As a result, the amount of decenter in the molded device can be reduced even further.

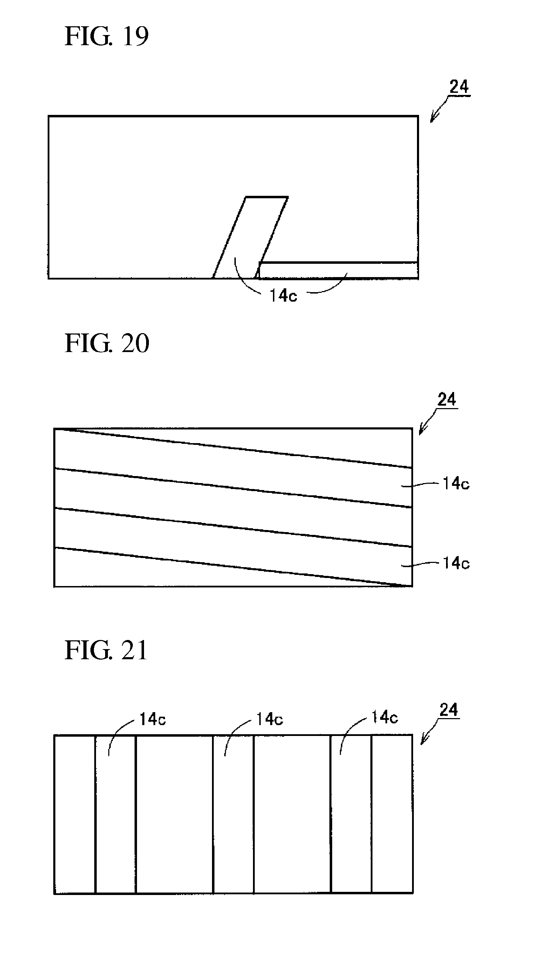

FIG. 19 is a development view of a body in which a groove intersecting the longitudinal axial direction is formed only in the lower half of the body, and a horizontal groove extends from the lower end of the first groove through to the exterior. In the groove 14c in FIG. 19, similar to the groove 14c shown in FIG. 15 previously described, a configuration for the groove 14c in FIG. 18 is designed in which the gas can pass through the body 14 and the sleeve 15 and can be expelled to the exterior of the component 10 for molding a device, due to the groove 14c being disposed in a direction coinciding with the horizontal direction from the lower end vicinity of the body 14.

The groove 14c shown in FIG. 16 previously described, which passes through the body 14 from the upper end to the lower end in a direction intersecting the longitudinal axial direction, may also have a groove 14c provided in a direction coinciding with the horizontal direction from the lower end vicinity of the body 14, similar to the groove 14c shown in FIG. 19. If so, gas flowing downward through the groove 14c can be more efficiently expelled to the exterior.

FIG. 20 is a development view of a body in which grooves are disposed so as to form a spiraling shape in the internal peripheral surface of the body. The grooves 14c in FIG. 20 are configured so as to form a spiraling shape in the internal peripheral surface of the body 14. In the case of two grooves 14c forming a spiraling shape in FIG. 20, the grooves are disposed in the upper half as well as the lower half in the longitudinal axial direction of the body 14. Therefore, a gas which has been led into the grooves 14c from the lower end vicinity of the groove 14c in the upper half of the longitudinal axial direction of the body 14 (the center vicinity of the longitudinal axial direction of the body 14) and which remains in the area enclosed by the upper die 11 and the lower die 12, for example, travels along the groove 14c in the upper half of the longitudinal axial direction of the of the body 14 to the upper end of the body 14, and from there the gas is expelled to the exterior of the component 10 for molding a device. Similarly, a gas which has been led into the grooves 14c from the upper end vicinity of the groove 14c in the lower half of the longitudinal axial direction of the body 14 (the center vicinity of the longitudinal axial direction of the body 14) and which remains in the area enclosed by the upper die 11 and the lower die 12, for example, travels along the groove 14c in the lower half of the longitudinal axial direction of the body 14 to the lower end of the body 14, and from there the gas is expelled to the exterior of the component 10 for molding a device. Since there are two directions, upward and downward, in which the gas can be expelled to the exterior, the gas can be efficiently expelled to the exterior.

With the spiraling shape formed by the grooves 14c in FIG. 20, the grooves 14c extend in a direction intersecting the longitudinal axial direction, similar to the grooves 14c in FIGS. 16 through 19 previously described. Moreover, the angle at which the grooves 14c extend in relation to the longitudinal axial direction of the body 14 is greater than those of the grooves 14c in FIGS. 16 through 19. Therefore, as a result of the grooves 14c intersecting the longitudinal axial direction of the body 14, the fitting of the pair of dies into the grooves 14c can be minimized more so than with the grooves 14c in FIGS. 16 through 19. The lengths of the grooves 14c in relation to the longitudinal axial direction are shorter, equal to half the length of the body 14 in the longitudinal axial direction in the case of the grooves 14c in FIG. 20. Therefore, the fitting of the pair of dies into the grooves 14c can be minimized due to the lengths of the grooves 14c in the direction of extension being shorter, similar to the grooves 14c in FIGS. 13 through 15 and FIGS. 17 through 19 previously described. The effect of both of these characteristics is that the grooves 14c in FIG. 20 makes it possible to minimize the fitting of the pair of dies into the grooves 14c. As a result, the amount of decenter in the molded device can be reduced even further.

FIG. 21 is a development view of a body in which a plurality of grooves is disposed in the internal peripheral surface of the body. A plurality of grooves 14c may be disposed in the internal peripheral surface of the body 14 as shown in FIG. 21. If so, gas can be expelled to the exterior more efficiently than in a case of only one groove 14c.

In cases in which a plurality of grooves 14c is disposed in the internal peripheral surface of the body 14 as shown in FIG. 21, the grooves 14c are preferably disposed in equal intervals along the internal peripheral direction of the body 14. The term "equal intervals" used herein includes not only cases in which the intervals are perfectly equal, but also cases in which the intervals are substantially equal, such as the intervals having a margin of error of 15% or less of the mean value of the intervals, for example. If the grooves 14c are disposed at equal intervals in this manner, the action of expelling the gas remaining between the pair of dies and the material 13 can be performed in a substantially uniform manner in the pair of dies, and consequently in the entire component 10 for molding a device. As a result, the stress applied to the entire component 10 for molding a device when the molding process is performed can be made substantially even, and shape defects and other molding defects in the molded device can be minimized.

FIG. 21 shows a body development view 24 of a case in which there is a plurality of grooves 14c, such as the groove shown in FIG. 12 previously described, extending in the longitudinal axial direction of the body 14. However, a plurality of grooves 14c such as those shown in FIGS. 13 through 19, for example, may also be used. The body 14 may also have a configuration in which grooves 14c such as those shown in FIGS. 13 through 19 are appropriately combined. If so, the fitting of the pair of dies into the grooves 14c can be minimized, for example.

EXAMPLE 1

Experiments for confirming the molded state were conducted on devices molded using the component 10 for molding a device according to the embodiment of the present invention, in which the previously described groove 14c as a concavity was disposed in at least part of the internal peripheral surface of the body 14; and devices molded using a component 10 for molding a device having no groove 14c.

The component 10 for molding a device shown in FIGS. 2 and 3 previously described and having a groove 14c extending in the longitudinal axial direction of the body 14 was prepared, as was a component for molding a device having no groove 14c. The following Table 1 is a table showing the materials and dimensions of the constituent elements of both components for molding a device in Example 1. As shown in Table 1, in both the component 10 for molding a device having the groove 14c and the component for molding a device having no groove 14c, the upper die 11 and the lower die 12 were molded using glass carbon, including their surfaces facing the body 14, which are the upper die external peripheral surface 11c and the lower die external peripheral surface 12c, referring to FIGS. 2 through 4. The outside diameter (see Dp in FIG. 8) of a circular shape formed by a cross section intersecting the longitudinal axial direction of the upper die 11 and the lower die 12 is 19.944 mm. The body 14 is formed from quartz glass, the inside diameter (see $D_i$ in FIG. 8) of a circular shape formed by a cross section intersecting the longitudinal axial direction of the body 14 is 20.01 mm, and the thickness of the circular shape formed by the cross section of the body is 10.00 mm. In the component 10 for molding a device having the groove 14c, the width 2D (see FIG. 4) of the groove 14c formed in the internal peripheral surface of the body 14 is 2.0 mm. The frame die 16 is formed from silicon nitride ($Si_3N_4$), and the outside diameter (see $D_r$ in FIG. 8) of a circular shape formed by a cross section of the frame die 16 is 19.915 mm. The length of the longitudinal axial direction of the pair of dies and the body 14 (i.e., the height in the vertical direction) is 40 mm.

Table 1

| Item | Material | Outside Diameter (mm) | Inside Diameter (mm) |
|---|---|---|---|
| Upper die 11 and lower die 12 | glass carbon | 19.944 | - |
| Upper die external peripheral surface 11c and lower die external peripheral surface 12c | | | |
| Body 14 | quartz glass | - | 20.01 |
| Frame die 16 | $Si_3N_4$ | 19.915 | - |
| Material 13 | ZnS | - | - |

The inside diameters (mm) of the upper die 11 and the lower die 12, for example are not recorded in Table 1 because the structures of the upper die 11 and the lower die 12 do not have inside diameters. Furthermore, the inside diameter (mm) of the frame die 16, the outside diameter (mm) of the body 14, and other parameters, for example, are not recorded because they are not considered essential points when implementing an example according to the present invention.

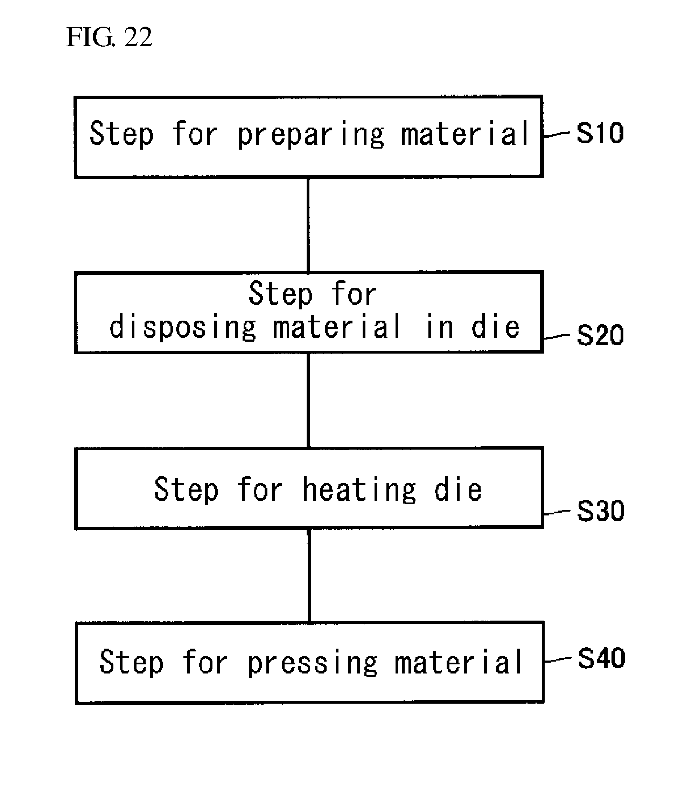

Devices were molded in practice using each of the components for molding a device described above. FIG. 22 is a flowchart showing a method for manufacturing a device using the component for molding a device according to the present invention. First, a step for preparing a material (S10) is carried out as shown in FIG. 22. Specifically, in Example 1, ZnS (zinc sulfide) was prepared as the material 13 as shown in Table 1. A step for disposing the material in the die (S20) is then carried out as shown in FIG. 22. Specifically, in Example 1, the above-described material 13 was disposed in an area inside the circle constituting the cross section of the frame die 16 disposed on the top surface of the lower die 12, which is the surface facing the upper die 11. Next, a step for heating the die (S30) was performed. Specifically, in Example 1, the pair of dies was heated to 1000°C. A step for pressing the material (S40) was then carried out as shown in FIG. 22. Specifically, in Example 1, with the pair of dies having been heated to 1000°C in the previous step (S30), the upper die 11 was set on the lower die 12 as shown in FIG. 2, the pair of upper and lower dies was arranged so as to mesh together, and a pressure of 50 MPa was applied from the upper die 11 toward the lower die 12 by using a pressure shaft of a device not shown in FIG. 2. Thus, a pressure of 50 MPa was applied to the material 13 (ZnS) that had been disposed on the top surface of the lower die 12 in the previous step (S20).

The state of the device formed by the steps described above was evaluated by measuring the relative density using Archimedes' Principle. Table 2 is a table showing the results of measuring samples of devices formed using the component 10 for molding a device having a groove 14c and a component for molding a device having no groove 14c. "Yes" indicates measurement results of samples of devices formed using the component 10 for molding a device having the groove 14c, and "No" indicates measurement results of samples of devices formed using a component for molding a device having no groove 14c. As shown in Table 2, the relative densities of the samples were measured for all of the total of 200 devices formed, 100 being formed using each component for molding a device, and samples whose relative densities were 99% or greater were designated as successful. The number of successful samples whose relative densities were 99% or greater is shown in Table 2.

Table 2

| Groove 14c in body 14 | Yes | No |
|---|---|---|
| Evaluated number of samples N | 100 | 100 |
| Number of "successful" samples having relative densities of 99% or greater | 100 | 0 |

As shown in Table 2, of the samples of devices formed using the component 10 for molding a device having the groove 14c, all 100 were "successful" samples whose relative densities were 99% or greater. Meanwhile, of the samples of devices formed using the component for molding a device having no groove 14c, 0 were "successful" samples whose relative densities were 99% or greater; in other words, all 100 of the 100 samples had relative densities less than 99%.

From the above results, gas remaining in the area enclosed by the pair of dies in the process of molding the device can be expelled to the exterior more efficiently via the groove 14c when the device has been formed using the component 10 for molding a device according to the present invention, in which a groove 14c is disposed in at least part of the area in the internal peripheral surface of the body 14. Therefore, it can be said that the ratio whereby gas is contained in the formed device is reduced. Consequently, when the device is formed using the component 10 for molding a device according to the present invention, a higher quality device having a greater relative density can be formed in comparison with cases of forming the device using a component for molding a device having no groove in the body.

EXAMPLE 2

In Example 2, a test was conducted to evaluate the amount of decenter in devices formed using the component 10 for molding a device having a groove 14c in the body 14.

In Example 2, a component 10 for molding a device having a groove 14c extending in the longitudinal axial direction of the body 14 was prepared, as shown in FIGS. 2 through 4 previously described. Table 3 below is a table showing the materials and dimensions of the constituent elements of the component for molding a device prepared in Example 2. As shown in Table 3, the component 10 for molding a device prepared in Example 2 has a groove 14c, and the material is substantially the same as that of the component 10 for molding a device having a groove 14c used in the previous Example 1, but the dimensions are approximately half the size of those of the component 10 for molding a device used in the previous Example 1. Four bodies 14 were prepared in which the sizes of the width 2D (see FIG. 4) of the groove 14c formed in the internal peripheral surface of the bodies 14 were 1.5 mm, 2 mm, 3 mm, and 4 mm.

Table 3

| Item | Material | Outside Diameter (mm) | Inside Diameter (mm) |
|---|---|---|---|
| Upper die 11 and lower die 12 | glass carbon | 9.972 | - |
| Upper die external peripheral surface 11c and lower die external peripheral surface 12c | | | |
| Body 14 | quartz glass | - | 10.025 |
| Frame die 16 | $Si_3N_4$ | 9.846 | - |
| Material 13 | ZnS | - | - |

Similar to the previous Example 1, 100 samples of devices using ZnS as the material 13 were formed using the bodies 14 having grooves 14c of different widths, based on the sequence in the flowchart of FIG. 22. The amount of decenter in the formed samples (the amount of misalignment in the center on both sides of the lens which is the device) was measured using laser probe 3D measuring equipment (Mitaka Kohki Co., Ltd.). The average values of the measured amounts of decenter were calculated and evaluated for each of the bodies 14 used. The evaluation results were compared with the average value of the amount of decenter of devices formed using a component for molding a device having no groove 14c. The results are expressed in a system in which the symbol ⊙ (best) indicates that the average value of increase in the amount of decenter of the samples formed in Example 2 is equal to or less than 0.5 $\mu$m, the symbol O (good) indicates that the average value of increase in the amount of decenter exceeded 0. 5 $\mu$m but was equal to or less than 1.0 $\mu$m, and the symbol × (poor) indicates that the average value exceeded 1.0 $\mu$m. Table 4 is a table showing the results of evaluating the average value of increase in the amount of decenter of the devices formed using the bodies having grooves 14c of different widths in Example 2.

Table 4

| Width 2D (mm) of groove 14c | 1.5 | 2 | 3 | 4 |
|---|---|---|---|---|
| Average value ($\mu$m) of increase in amount of decenter | 0.2 | 0.3 | 0.7 | 1.4 |
| Evaluation results | ⊙ | ⊙ | O | × |

As shown in Table 4, the best results of 0.2 $\mu$m and 0.3 $\mu$m for the average value of increase in the amount of decenter of the 100 samples were obtained with the devices molded using the components 10 for molding a device having bodies 14 whose groove 14c widths were 1.5 mm and 2 mm, respectively. In the devices formed using the component 10 for molding a device having a body 14 whose groove 14c width was 3 mm, the average value of increase in the amount of decenter of the 100 samples was 0.7 $\mu$m, which was still less than 1 $\mu$m, the allowable amount of increase in the amount of decenter. In the devices formed using the body 14 whose groove 14c width was 4 mm, the result was that the average value of increase in the amount of decenter of the 100 samples exceeded 1 $\mu$m.

From the above results, it can be said that if a device is formed using the component 10 for molding a device according to the present invention and the width of the groove 14c in the body 14 is 3 mm or less, or more preferably 2 mm or less, a high-quality device can be formed in which the increase in the amount of decenter of the formed device is kept within the allowable range.

EXAMPLE 3

In Example 3, a test was conducted similar to Example 2, using a component 10 for molding a device in which the materials and dimensions of the pair of dies, the body, and the frame die had been changed from those in Example 2. Table 5 below is a table showing the materials and dimensions of the constituent elements of the component for molding a device prepared in Example 3. As shown in Table 5, the component 10 for molding a device prepared in Example 3 had a groove 14c, and, as shown in FIGS. 2 through 4, the upper die 11 and the lower die 12 were formed using silicon carbide. In both the upper die 11 and the lower die 12, a film of DLC was formed as their external peripheral surfaces; respectively, the upper die external peripheral surface 11c and the lower die external peripheral surface 12c, from the standpoint that these surfaces would be the sliding surfaces facing the body 14. The thin films of DLC each had a thickness of 3 $\mu$m. Thin films formed as sliding surfaces preferably have a thickness of from 1 $\mu$m or greater to 5 $\mu$m or less, and even more preferably from 2 $\mu$m or greater to 4 $\mu$m or less. Forming thin films on the external peripheral surfaces of the upper die 11 and the lower die 12 in this manner reduces sliding resistance against the body 14 when the upper die 11 and the lower die 12 are moved in the step for pressing the material (S40) shown in FIG. 22, for example. This accordingly achieves the effect of minimizing galling or catching of the upper die 11 or lower die 12 against the body 14.

A circular shape formed by a cross section intersecting the longitudinal axial direction of the upper die 11 and the lower die 12 has an outside diameter (see Dp in FIG. 8) of 11.947. The body 14 is formed from glass carbon, and a circular shape formed by a cross section intersecting the longitudinal axial direction of the body has an inside diameter (see $D_i$ in FIG. 8) of 11.996 mm. Four bodies 14 were prepared in which the sizes of the width 2D (see FIG. 2) of the groove 14c formed in the internal peripheral surface of the bodies 14 were 2 mm, 3 mm, 4 mm, and 5 mm. The frame die 16 was formed from silicon carbide (SiC), and a circular shape formed by the cross section of the frame die had an outside diameter (see $D_r$ in FIG. 8) of 11.853 mm. The lengths (i.e. vertical heights) of the pair of dies and the body 14 in the longitudinal axial direction were 40 mm.

Table 5

| Item | Material | Outside Diameter (mm) | Inside Diameter (mm) |
|---|---|---|---|
| Upper die 11 and lower die 12 | SiC | 11.947 | - |
| Upper die external peripheral surface 11c and lower die external peripheral surface 12c | DLC | - | - |
| Body 14 | Glass carbon | - | 11.996 |
| Frame die 16 | SiC | 11.853 | - |
| Material 13 | ZnS | - | - |

Similar to the previous Example 2, 100 samples of devices using ZnS as the material 13 were formed using the bodies 14 having grooves 14c of different widths, based on the sequence in the flowchart of FIG. 22. The amount of decenter in the formed samples was measured using laser probe 3D measuring equipment (Mitaka Kohki Co., Ltd.). The average values of the measured amounts of decenter were calculated and evaluated for each of the bodies 14 used. The evaluation results are expressed by the same system as that of the previous Example 2. Table 6 is a table showing the results of evaluating the average value of increase in the amount of decenter of the devices formed using the bodies having different groove widths in Example 3.

Table 6

| Width 2D (mm) of groove 14c | 2 | 3 | 4 | 5 |
|---|---|---|---|---|
| Average value ($\mu$m) of increase in amount of decenter | 0.2 | 0.5 | 0.9 | 1.5 |
| Evaluation results | ⊙ | ⊙ | O | × |

As shown in Table 6, the best results of 0.2 $\mu$m and 0.5 $\mu$m for the average value of increase in the amount of decenter of the 100 samples were obtained with the devices molded using the components 10 for molding a device having bodies 14 whose groove 14c widths were 2 mm and 3 mm, respectively. In the devices formed using the component 10 for molding a device having a body 14 whose groove 14c width was 4 mm, the average value of increase in the amount of decenter of the 100 samples was 0.9 $\mu$m, which was still less than 1 $\mu$m, the allowable amount of increase in the amount of decenter. In the devices formed using the body 14 whose groove 14c width was 5 mm, the result was that the average value of the amount of decenter of the 100 samples exceeded 1 $\mu$m.

From the above results, it can be said that if a device is formed using the component 10 for molding a device according to the present invention and the width of the groove 14c in the body 14 is 4 mm or less or more preferably 3 mm or less, a high-quality device can be formed in which the increase in the amount of decenter of the formed device is kept within the allowable range.

EXAMPLE 4

Example 4 is a test conducted in order to verify the range of materials which can be used in the constituent elements constituting the component 10 for molding a device. Table 7 is a table showing the materials and dimensions of the constituent elements of the component for molding a device prepared in one aspect of Example 4 of the present invention, as well as the evaluation results. As shown in Table 7, in the component 10 for molding a device prepared in one aspect of Example 4 of the present invention, the upper die 11 and the lower die 12 were formed using carbide. In both the upper die 11 and the lower die 12, a thin film of diamond was formed as their external peripheral surfaces; respectively, the upper die external peripheral surface 11c and the lower die external peripheral surface 12c, from the standpoint that these surfaces would be the sliding surfaces facing the body 14. Each of the thin films of diamond had a thickness of 3 $\mu$m. A circular shape formed by a cross section intersecting the longitudinal axial direction of the upper die 11 and lower die 12 had an outside diameter (see Dp in FIG. 8) of 19.901 mm. The body 14 was formed from silicon nitride, and a circular shape formed by a cross section intersecting the longitudinal axial direction of the body had an inside diameter (see $D_i$ in FIG. 8) of 19.930 mm. In the body 14, the size of the width 2D (see FIG. 2) of the groove 14c in the internal peripheral surface was 5 mm. The frame die 16 was formed from $B_4C$ (boron carbide), and a circular shape formed by the cross section of the frame die had an outside diameter (see $D_r$ in FIG. 8) of 19.895 mm. The pair of dies and the body 14 in the longitudinal axial direction were 40 mm in length (i.e. vertical height).

As with the previous Example 3, 100 samples of devices using ZnS as the material 13 were formed using the component 10 for molding a device described above, based on the sequence in the flowchart of FIG. 22. The amount of decenter in the formed samples was measured using laser probe 3D measuring equipment (Mitaka Kohki Co., Ltd.). The average values of the measured amounts of decenter were calculated and evaluated for each of the bodies 14 used. The evaluation results are expressed by the same system as that of the previous Examples 2 and 3.

Table 7

| Item | Material | Outside Diameter (mm) | Inside Diameter (mm) | Width 2D of Groove 14c (mm) | Evaluation Results (average value of increase in amount of decenter) |
|---|---|---|---|---|---|
| Upper die 11 and lower die 12 | carbide | 19.901 | - | 5 | $\odot$ (0.1 $\mu$m) |
| Upper die external peripheral surface 11c and lower die external peripheral surface 12c | diamond | - | - | | |
| Body 14 | $Si_3N_4$ | - | 19.930 | | |
| Frame die 16 | $B_4C$ | 19.895 | - | | |
| Material 13 | ZnS | - | - | | |

(continued)

| Item | Material | Outside Diameter (mm) | Inside Diameter (mm) | Width 2D of Groove 14c (mm) | Evaluation Results (average value of increase in amount of decenter) |
|---|---|---|---|---|---|
| Upper die 11 and lower die 12 | carbide | 19.901 | - | | |
| Upper die external peripheral surface 11c and lower die external peripheral surface 12c | diamond | - | - | 5 | ⊙ (0.1 $\mu$m) |
| Body 14 | $Si_3N_4$ | - | 19.930 | | |
| Frame die 16 | $B_4C$ | 19.895 | - | | |
| Material 13 | ZnS | - | - | | |

As shown in Table 7, the average value of increase in the amount of decenter was 0.1 $\mu$m, which is less than 0.5 $\mu$m, and the evaluation result is therefore ⊙ (best). Specifically, a carbon-containing material is used in the main bodies and external peripheral surfaces of the dies, even by using carbide, for example, instead of glass carbon as the pair of dies and forming thin films of diamond on the external peripheral surfaces of the pair of dies. Therefore, even if the component 10 for molding a device is configured using the materials of the constituent elements in the above-described aspect of Example 4 of the present invention, the component 10 for molding a device is capable of being used to form satisfactory devices in which the increase in the amount of decenter is small.

Table 8 is a table showing the materials and dimensions of the constituent elements of the component for molding a device prepared in a second aspect of Example 4 of the present invention, as well as the evaluation results. As shown in Table 8, in the component 10 for molding a device prepared in one aspect of Example 4 of the present invention, the upper die 11 and the lower die 12, including the upper die external peripheral surface 11c and the lower die external peripheral surface 12c, were formed using graphite. A circular shape formed by a cross section intersecting the longitudinal axial direction of the upper die 11 and the lower die 12 had an outside diameter (Dp in FIG. 8) of 7.956 mm. The body 14 was formed from quartz, and a circular shape formed by a cross section intersecting the longitudinal axial direction of the body had an inside diameter ($D_i$ in FIG. 8) of 8.016 mm. The size of the width 2D of the groove 14c in the internal peripheral surface of the body 14 was 2 mm. The frame die 16 was formed from $Al_2O_3$ (alumina), and a circular shape formed by a cross section of the frame die had an outside diameter (see $D_r$ in FIG. 8) of 7.908 mm. All other conditions were identical to those of the previously described aspect of Example 4 of the present invention. The manufacturing method and evaluation method of the device were also identical to those of the previously described aspect of Example 4 of the present invention.

Table 8

| Item | Material | Outside Diameter (mm) | Inside Diameter (mm) | Width 2D of Groove 14c (mm) | Evaluation Results (average value of increase in amount of decenter) |
|---|---|---|---|---|---|
| Upper die 11 and lower die 12 | graphite | 7.956 | - | 2 | $\odot$ (0.3 $\mu$m) |
| Upper die external peripheral surface 11c and lower die external peripheral surface 12c | | | | | |
| Body 14 | quartz | - | 8.016 | | |
| Frame die 16 | $Al_2O_3$ | 7.908 | - | | |
| Material 13 | ZnS | - | - | | |

As shown in Table 8, the average value of increase in the amount of decenter was 0.3 $\mu$m, which is less than 0.5 $\mu$m, and the evaluation result is therefore $\odot$ (best). A carbon-containing material is used in the main bodies and external peripheral surfaces of the dies, even if graphite is used instead of glass carbon or carbide as the pair of dies. Therefore, even if the component 10 for molding a device is configured using the materials of the constituent elements in the above-described second aspect of Example 4 of the present invention, the component 10 for molding a device is capable of forming satisfactory devices in which the increase in the amount of decenter is small.

Table 9 is a table showing the materials and dimensions of the constituent elements of the component for molding a device prepared in a third aspect of Example 4 of the present invention, as well as the evaluation results. As shown in Table 9, in the component 10 for molding a device prepared in one aspect of Example 4 of the present invention, the upper die 11 and the lower die 12 were formed using carbide. DLC having a thickness of 3 $\mu$m was formed on the upper die external peripheral surface 11c and the lower die external peripheral surface 12c. A circular shape formed by a cross section intersecting the longitudinal axial direction of the upper die 11 and the lower die 12 had an outside diameter (Dp in FIG. 8) of 24.876 mm. The body 14 was formed from glass carbon, and a circular shape formed by a cross section intersecting the longitudinal axial direction of the body had an inside diameter ($D_i$ in FIG. 8) of 24.96 mm. The size of the width 2D of the groove 14c in the internal peripheral surface of the body 14 was 6.5 mm. The frame die 16 was formed from zirconia, and a circular shape formed by a cross section of the frame die had an outside diameter (see $D_r$ in FIG. 8) of 24.676 mm. All other conditions were identical to those of the previously described aspect of Example 4 of the present invention. The manufacturing method and evaluation method of the device were also identical to those of the previously described aspect of Example 4 of the present invention.

Table 9

| Item | Material | Outside Diameter (mm) | Inside Diameter (mm) | Width 2D of Groove 14c (mm) | Evaluation Results (average value of increase in amount of decenter) |
|---|---|---|---|---|---|
| Upper die 11 and lower die 12 | carbide | 24.876 | - | 6.5 | O (0.6 $\mu$m) |
| Upper die external peripheral surface 11c and lower die external peripheral surface 12c | DLC | - | - | | |
| Body 14 | glass carbon | - | 24.96 | | |
| Frame die 16 | Zirconia | 24.676 | - | | |
| Material 13 | ZnS | - | - | | |

As shown in Table 9, the average value of increase in the amount of decenter was 0.6 $\mu$m, which is less than 1.0 $\mu$m, and the evaluation result is therefore O (good). A carbon-containing material is used in the main bodies and external peripheral surfaces of the dies, even by using carbide, for example, instead of glass carbon as the pair of dies and forming thin films of DLC on the external peripheral surfaces of the pair of dies. Therefore, even if the component 10 for molding a device is configured using the materials of the constituent elements in the above-described third aspect of Example 4 of the present invention, the component 10 for molding a device is capable of forming satisfactory devices in which the increase in the amount of decenter is small.

Example 5

Example 5 was a test on the effects of varying the shape and number of grooves 14c formed in the body 14. Table 10 is a table showing the materials and dimensions of the elements constituting the component for molding a device prepared in Table 5. As shown in Table 10, in the component 10 for molding a device prepared in order to form the devices in Example 5 of the present invention, the materials and dimensions of the constituent elements are all kept the same while only the shape of the groove 14c is varied. Specifically, as shown in Table 10, the materials and dimensions (outside diameter, inside diameter) of the constituent elements are all identical to those of the component 10 for molding a device prepared in Example 2 previously described. The material 13 of the devices molded in Example 5 is also ZnS, similar to Examples 1 through 4 previously described. The widths of the formed grooves 14c are all 2 mm. The devices were also formed based on the sequence in the flowchart shown in FIG. 22, similar to Examples 1 through 4 previously described.

Table 10

| Item | Material | Outside Diameter (mm) | Inside Diameter (mm) | Width 2D of Groove 14c (mm) | Shape of Groove 14c |
|---|---|---|---|---|---|
| Upper die 11 and lower die 12 | Glass carbon | 9.972 | - | - | see Table 11 |
| Upper die external peripheral surface 11c and lower die external peripheral surface 12c | | | | | |
| Body 14 | Quartz glass | - | 10.025 | 2 | |
| Frame die 16 | $Si_3N_4$ | 9.846 | - | - | |
| Material 13 | ZnS | - | - | - | |

Table 11 is a table showing the shape and number of grooves in different bodies in Example 5, as well as the results of evaluating decenter in the devices formed using these bodies. As shown in Table 11, the shapes of the grooves are the shapes of the grooves 14c of the body development views 24 of FIGS. 12 through 20 previously described. The number of grooves 14c provided to the bodies 14 is also shown, and in all cases of multiple grooves, the grooves are disposed so as to be at substantially equal intervals along the circumferential direction of the internal peripheral surface.

One hundred device samples were formed using each of the bodies 14 having the respective groove 14c shapes, and the amount of decenter in the samples formed was measured using laser probe 3D measuring equipment (Mitaka Kohki Co., Ltd.). The average values of the measured amounts of decenter were calculated and evaluated for each body 14 used. The evaluation results are expressed by the same system as that of the previous Examples 2 through 4.

As shown in Table 11, in cases in which the extending direction of the groove 14c was an intersecting direction (inclined direction) relative to the longitudinal axial direction of the body 14 (the vertical direction of the drawing) as in FIGS. 16, 17, 19, and 20, the groove inclination angle relative to a vertical line (i.e., the groove inclination angle relative to the longitudinal axial direction) is shown.

Table 11

| Shape of Groove 14c | No. | Number of Grooves 14c | Increase in Amount of decenter ($\mu$m) | Evaluation Result | Comments |
|---|---|---|---|---|---|
| FIG. 12 | 1 | 1 | 0.3 | ⊙ | |
| FIG. 12 | 1 | 3 | 0.3 | ⊙ | |
| FIG. 13 | 2 | 2 | 0.2 | ⊙ | |
| FIG. 15 | 3 | 4 | 0.2 | ⊙ | |
| FIG. 16 | 4 | 1 | 0.1 | ⊙ | Groove inclination angle 3° from vertical line |
| FIG. 17 | 5 | 2 | 0.1 | ⊙ | Groove inclination angle 5° from vertical line |
| FIG. 19 | 6 | 1 | 0.1 | ⊙ | Groove inclination angle 5° from vertical line |

(continued)

| Shape of Groove 14c | No. | Number of Grooves 14c | Increase in Amount of decenter ($\mu$m) | Evaluation Result | Comments |
|---|---|---|---|---|---|
| FIG. 20 | 7 | 1 | 0.1 | ⊙ | Groove inclination angle 40° from vertical line |

As shown in Table 11, even if any of the shapes shown in FIGS. 12 through 20 were used and there were used bodies 14 in which grooves 14c having a width of 2 mm were formed, the devices formed by a component 10 for molding a device using these bodies 14 were satisfactory devices in which the average value of increase in the amount of decenter was 0.3 $\mu$m or less (an evaluation result of ⊙) and the increase in the amount of decenter was small. In cases in which the extending direction of the groove 14c was an intersecting direction (inclined direction) relative to the longitudinal axial direction as shown in FIGS. 16, 17, 19, and 20, the pair of dies did not readily fit into the groove 14c as previously described, and satisfactory devices were therefore successfully formed in which the average value of increase in the amount of decenter was 0.1 $\mu$m or less and the increase in the amount of decenter was reduced. Particularly in the case of using a body 14 having a configuration in which the grooves 14c formed a spiraling shape as shown in FIG. 20, the average value of the increase in the amount of decenter was successfully kept to nearly zero.

The embodiments and examples disclosed herein are given by way of example in all regards and should not be construed as being restrictive. The scope of the present invention is defined not by the foregoing descriptions but by the claims, and the scope of the present invention is intended to include the claims, their equivalent meanings, and all modifications within the scope of the claims.

INDUSTRIAL APPLICABILITY

The present invention has value particularly as a technique for forming a satisfactory device which is high in quality while having a high relative density and a small amount of decenter.

DESCRIPTION OF SYMBOLS

10:      Component for molding a device
11:      Upper die
11c:    Upper die external peripheral surface
11d:    Upper die molding surface
12:      Lower die
12c:    Lower die external peripheral surface
12d:    Lower die molding surface
13:      Material
14:      Body
14a:    Body external peripheral surface
14b:    Body internal peripheral surface
14c:    Groove
15:      Sleeve
16:      Frame die
17:      R-chamfered surface
18:      C-chamfered surface
24:      Body development view

**Claims**

**1.**  A component for molding a device used to mold a device, the component for molding a device comprising:

a pair of dies for performing molding;
a hollow body disposed so as to enclose external peripheral surfaces of the dies; and

a frame die for adjusting the position of the material constituting the device between the pair of dies; wherein a concavity is formed in an area constituting at least part of an internal peripheral surface of the body facing the external peripheral surface of the dies.

2. The component for molding a device according to Claim 1, wherein the external shape of a cross section intersecting the longitudinal axial direction of the dies, the body, and the frame die is circular.

3. The component for molding a device according to Claim 2, wherein
a distance L (mm) over which the dies fit into the concavity in a radial direction of a circular shape formed by the cross section of the body and the dies satisfies the equation:

$$L = R_m - \sqrt{(R_m{}^2 - D^2)} - \{R_s - \sqrt{(R_s{}^2 - D^2)}\} \leq 0.001$$

where 2D (mm) is the width of the concavity that extends in a direction intersecting the longitudinal axial direction of the dies, $R_m$ (mm) is the radius of the dies from the center of a circular shape formed by the cross section of the dies to the external peripheral surfaces of the dies, and $R_s$ (mm) is the radius of the body from the center of a circular shape formed by the cross section of the body to the internal peripheral surface of the body.

4. The component for molding a device according to Claim 2 or 3, wherein the following relationships are satisfied:

$$\alpha_1 < \alpha_2$$

$$\alpha_1 < \alpha_3$$

$$0.030 \geq (\alpha_1 D_i - \alpha_2 D_p)\Delta T + (D_i - D_p) \geq 0.005$$

$$0.150 \geq (\alpha_1 D_i - \alpha_3 D_r)\Delta T + (D_i - D_r) \geq 0.015$$

where T (°C) is the sintering temperature when the material is molded, $D_i$ (mm) is the inside diameter of a circular shape formed by a cross section intersecting the longitudinal axial direction of the body, Dp (mm) is the outside diameter of a circular shape formed by a cross section intersecting the longitudinal axial direction of the dies, $D_r$ (mm) is the outside diameter of a circular shape formed by a cross section intersecting the longitudinal axial direction of the frame die, $\alpha_1$ (/°C) is the average coefficient of thermal expansion of the body from room temperature at which the material is disposed between the pair of dies to T (°C), $\alpha_2$ (/°C) is the average coefficient of thermal expansion of the dies from room temperature to T (°C), $\alpha_3$ (/°C) is the average coefficient of thermal expansion of the frame die from room temperature to T (°C), and $\Delta T$ (°C) is the difference between the sintering temperature T (°C) and the room temperature.

5. The component for molding a device according to any of Claims 1 through 4, wherein the concavity extends in a direction coinciding with the longitudinal axial direction of the body.

6. The component for molding a device according to any of Claims 1 through 4, wherein the concavity extends in a direction intersecting the longitudinal axial direction of the body.

7. The component for molding a device according to any of Claims 1 through 4, wherein the concavity is disposed so as to describe a spiraling shape in the internal peripheral surface of the body.

8. The component for molding a device according to any of Claims 1 through 7, wherein a plurality of the concavities are formed in the internal peripheral surface of the body.

9. The component for molding a device according to Claim 8, wherein the plurality of concavities formed are disposed at equal intervals in the circumferential direction of the internal peripheral surface of the body.

10. The component for molding a device according to any of Claims 1 through 9, wherein the body contains at least 90 mass% or more of a material whose coefficient of thermal expansion is from $1.0 \times 10^{-7}$ (/°C) or greater to $3.5 \times 10^{-6}$ (/°C) or less.

11. The component for molding a device according to any of Claims 1 through 10, wherein the body contains at least 90 mass% or more of quartz glass.

12. The component for molding a device according to any of Claims 1 through 10, wherein the body contains at least 90 mass% or more of silicon nitride.

13. The component for molding a device according to any of Claims 1 through 12, wherein at least the sliding surfaces of the dies facing the internal peripheral surface of the body are formed from a carbon-containing material.

14. The component for molding a device according to Claim 13, wherein the carbon-containing material includes any one material selected from the group consisting of graphite, glass carbon, DLC, and diamond.

15. The component for molding a device according to Claim 13 or 14, wherein the edges of the dies, where the sliding surfaces and pressing surfaces for pressing the material intersect, are surfaces having an R-chamfer or C-chamfer of from 0.2 mm or greater to 1.0 mm or less.

16. The component for molding a device according to any of Claims 1 through 15, wherein the frame die is configured from a ceramic material having a flexural strength of 300 MPa or greater.

17. The component for molding a device according to any of Claims 1 through 16, wherein the frame die is configured from a material including any one ingredient selected from the group consisting of silicon carbide, silicon nitride, alumina, boron carbide, zirconia, and tantalum carbide.

18. A method for manufacturing a device using the component for molding a device according to any of Claims 1 through 17.

19. A device formed using the component for molding a device according to any of Claims 1 through 17.

FIG. 1

FIG. 2

FIG. 3

FIG. 4

FIG. 5

FIG. 6

FIG. 7

## FIG. 8

## FIG. 9

FIG. 10

FIG. 11

B

FIG. 12

EP 2 345 625 A1

FIG. 13

FIG. 14

FIG. 15

FIG. 16

FIG. 17

FIG. 18

FIG. 19

24

14c

FIG. 20

24

14c

14c

FIG. 21

14c     14c     14c     24

FIG. 22

```
┌─────────────────────────────────────┐
│   Step for preparing material       │──S10
└─────────────────────────────────────┘
                    │
┌─────────────────────────────────────┐
│             Step for                │
│    disposing material in die        │──S20
└─────────────────────────────────────┘
                    │
┌─────────────────────────────────────┐
│      Step for heating die           │
│                                     │──S30
└─────────────────────────────────────┘
                    │
┌─────────────────────────────────────┐
│    Step for pressing material       │──S40
└─────────────────────────────────────┘
```

# INTERNATIONAL SEARCH REPORT

International application No.

PCT/JP2009/068336

### A. CLASSIFICATION OF SUBJECT MATTER
*C03B11/08*(2006.01)i, *C03B11/00*(2006.01)i

According to International Patent Classification (IPC) or to both national classification and IPC

### B. FIELDS SEARCHED

Minimum documentation searched (classification system followed by classification symbols)
C03B11/00-11/16

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2007-176707 A (Asahi Glass Co., Ltd.), 12 July 2007 (12.07.2007), claims; fig. 1 (Family: none) | 19 |
| X<br>Y | JP 2007-332005 A (Matsushita Electric Industrial Co., Ltd.), 27 December 2007 (27.12.2007), paragraphs [0013], [0014]; fig. 1 to 4 (Family: none) | 19<br>1-19 |
| X<br>Y | JP 2002-114529 A (Matsushita Electric Industrial Co., Ltd.), 16 April 2002 (16.04.2002), paragraphs [0014] to [0016], [0032]; fig. 7 (Family: none) | 19<br>1-19 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
06 November, 2009 (06.11.09)

Date of mailing of the international search report
17 November, 2009 (17.11.09)

Name and mailing address of the ISA/
Japanese Patent Office

Authorized officer

Facsimile No.

Telephone No.

Form PCT/ISA/210 (second sheet) (April 2007)

**INTERNATIONAL SEARCH REPORT**

International application No.

PCT/JP2009/068336

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-234742 A (Matsushita Electric Industrial Co., Ltd.), 23 August 2002 (23.08.2002), paragraphs [0018] to [0020]; fig. 2 to 4 (Family: none) | 1-19 |
| Y | JP 2007-070215 A (Ashu Kogaku Kofun yugen Koshi), 22 March 2007 (22.03.2007), paragraph [0024]; fig. 1 to 4 & TW 285191 B | 1-19 |
| Y | JP 2004-137125 A (Matsushita Electric Industrial Co., Ltd.), 13 May 2004 (13.05.2004), paragraph [0007] (Family: none) | 3,6,7 |
| Y | JP 2003-112931 A (Olympus Optical Co., Ltd.), 18 April 2003 (18.04.2003), paragraph [0003] (Family: none) | 3,6,7 |
| Y | JP 2001-097727 A (Fuji Photo Optical Co., Ltd.), 10 April 2001 (10.04.2001), paragraph [0019] (Family: none) | 10-14,16,17 |
| Y | JP 2006-045038 A (Sumitomo Electric Industries, Ltd.), 16 February 2006 (16.02.2006), claims (Family: none) | 10-14,16,17 |
| Y | JP 05-070155 A (Matsushita Electric Industrial Co., Ltd.), 23 March 1993 (23.03.1993), fig. 1 (Family: none) | 15 |
| Y | JP 06-263462 A (Olympus Optical Co., Ltd.), 20 September 1994 (20.09.1994), fig. 1 (Family: none) | 15 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8337428 A
- JP 2007314385 A
- JP 2007176707 A
- JP 2005145777 A